(19) Europäisches Patentamt / European Patent Office / Office européen des brevets

(11) EP 4 592 344 A1

(12) EUROPEAN PATENT APPLICATION
published in accordance with Art. 153(4) EPC

(43) Date of publication:
**30.07.2025 Bulletin 2025/31**

(21) Application number: **23868638.0**

(22) Date of filing: **22.09.2023**

(51) International Patent Classification (IPC):
***C08L 23/08*** *(2025.01)* ***C08F 210/16*** *(2006.01)*
***C08F 210/14*** *(2006.01)* ***C08J 5/18*** *(2006.01)*
***B29C 55/12*** *(2006.01)*

(52) Cooperative Patent Classification (CPC):
**B29C 55/12; C08F 210/14; C08F 210/16; C08J 5/18; C08L 23/08**

(86) International application number:
**PCT/KR2023/014459**

(87) International publication number:
**WO 2024/063586 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.09.2022 KR 20220120055**
**21.09.2023 KR 20230126269**

(71) Applicant: **LG Chem, Ltd.**
**Seoul 07336 (KR)**

(72) Inventors:
- **PARK, Cheol Hun**
  **Daejeon 34122 (KR)**
- **YOU, Youngsuk**
  **Daejeon 34122 (KR)**
- **KIM, Yeonsoo**
  **Daejeon 34122 (KR)**
- **KIM, Taejin**
  **Daejeon 34122 (KR)**
- **LEE, Sanghwa**
  **Daejeon 34122 (KR)**
- **KIM, Inkyo**
  **Daejeon 34122 (KR)**
- **CHOI, Eun Yeob**
  **Daejeon 34122 (KR)**

(74) Representative: **Hoffmann Eitle**
**Patent- und Rechtsanwälte PartmbB**
**Arabellastraße 30**
**81925 München (DE)**

(54) **POLYETHYLENE COMPOSITION AND BIAXIALLY STRETCHED FILM COMPRISING SAME**

(57) The present disclosure relates to a polyethylene composition suitable for a biaxially stretched film, which has excellent stretching stability and high shrinkage resistance while maintaining excellent mechanical properties.

EP 4 592 344 A1

## Description

[TECHNICAL FIELD]

**CROSS-REFERENCE TO RELATED APPLICATION(S)**

This application claims the benefit of Korean Patent Applications No. 10-2022-0120055 filed on September 22, 2022, and No. 10-2023-0126269 filed on September 21, 2023 with the Korean Intellectual Property Office, the disclosures of which are incorporated herein by reference in their entirety.
The present disclosure relates to a polyethylene composition suitable for a biaxially stretched film by having high shrinkage resistance, printability and transparency while maintaining excellent mechanical properties.

[BACKGROUND]

Thin film products made of linear low density polyethylene (LLDPE) and/or high density polyethylene (HDPE) are widely used in packaging such as merchandise bags, grocery bags, food and specialty packaging, and industrial liners. In these applications, a shrink film capable of packaging the product while maintaining its shape is mainly used to protect the product from being touched during display.
In particular, among these shrink films, biaxially stretched polymer films have excellent mechanical properties, productivity, and printability, and thus are widely used in packaging. Commercially available packaging films generally use BOPP (bi-axially oriented polypropylene), BOPET (biaxially-oriented polyethylene terephthalate) or BOPA (biaxially-oriented polyamide) for a printing layer, and use LLDPE for a sealing layer. These composite materials cannot be recycled, and the demand for a single material is increasing due to regulations on recycling of packaging materials. Therefore, research and development are being conducted to manufacture a single-material packaging film by replacing the film of the printing layer with a biaxially-oriented polyethylene (BOPE) film.
However, commercially available polyethylene (PE) resins do not have sufficient stretching stability, and phenomena such as breakage and melting occur during stretching, making it difficult to apply them to the biaxial stretching process. In order to secure stretching stability, a product in the form of a polyethylene composition containing a resin having a low density and a high melting index has been developed. However, the composition as described above is unsuitable as a PE resin for biaxially stretched film due to low stiffness, shrinkage, and impact resistance.
Therefore, there is a need for a method of selecting a PE resin having a molecular structure favorable to stretching and selecting an appropriate composition, thereby providing a PE composition for biaxial stretching that exhibits stretching stability during biaxial stretching and has good film mechanical properties.

[DETAILED DESCRIPTION OF THE INVENTION]

[Technical Problem]

The present disclosure relates to a polyethylene composition capable of preparing a biaxially stretched film having high shrinkage resistance, printability and transparency while maintaining excellent mechanical properties, productivity and stretching stability, and a biaxially stretched film including the same.

[Technical Solution]

According to one embodiment of the present disclosure, there is provided a polyethylene composition including at least one ethylene-alpha olefin copolymer, wherein a main chain of a high crystalline fraction eluting at 90 °C or more ($Mw_{main,\ T\geq 90\ °C}$) derived from cross fractionation chromatography (CFC) analysis of the polyethylene composition has a weight average molecular weight of 150000 g/mol or less.
In another embodiment of the present disclosure, there is provided a biaxially stretched film including the polyethylene composition of the above embodiment.
Hereinafter, the polyethylene composition and biaxially oriented film according to embodiments of the present disclosure will be described in detail.
The terminology used herein is for the purpose of describing particular embodiments only and is not intended to be limiting of the invention.
The singular forms are intended to include the plural forms as well, unless the context clearly indicates otherwise.
In this disclosure, the terminology "include," "comprise," or "have" is used to describe stated features, numbers, steps, components, or combination thereof, and do not preclude the addition of one or more other features, numbers, steps, components, or combinations thereof.

The terminology "about" or "substantially" is intended to have meanings close to numerical values or ranges specified with an allowable error and intended to prevent accurate or absolute numerical values disclosed for understanding of the present invention from being illegally or unfairly used by any unconscionable third party.

Further, in the present disclosure, the (co)polymer is meant to include both a homo-polymer and a co-polymer.

Unless otherwise defined herein, "copolymerization" may mean block copolymerization, random copolymerization, graft copolymerization or alternating copolymerization, and "copolymer" means block copolymer, random copolymer, graft copolymer or alternating copolymer.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the present disclosure will be described in more detail.

## Polyethylene composition

According to one aspect of the present disclosure, there is provided a polyethylene composition including at least one ethylene-alpha olefin copolymer, wherein a main chain of a high crystalline fraction eluting at 90 °C or more ($Mw_{main,\ T\geq 90\ °C}$) derived from cross fractionation chromatography (CFC) analysis of the polyethylene composition has a weight average molecular weight of 150000 g/mol or less.

In addition, "part by weight" as used herein refers to a relative concept of a ratio of the weight of the remaining material based on the weight of a specific material. For example, in a mixture containing 50 g of material A, 20 g of material B, and 30 g of material C, the amounts of material B and C based on 100 parts by weight of material A are 40 parts by weight and 60 parts by weight, respectively.

Meanwhile, "wt% (% by weight)" refers to an absolute concept of expressing the weight of a specific material in percentage based on the total weight. In the above-described mixture, the contents of material A, B and C based on 100% of the total weight of the mixture are 50 wt %, 20 wt % and 30 wt %, respectively.

In the polyethylene composition of the present disclosure, the first ethylene-alpha olefin copolymer, which has excellent flowability to impart stretchability, is blended with the second ethylene-alpha olefin copolymer, which has excellent mechanical properties by applying specific metallocene catalysts, which will be described later, respectively, thereby adjusting the balance between mechanical properties and elongation. Accordingly, it has characteristics suitable for manufacturing a biaxially stretched film having high shrinkage resistance, printability, and transparency while maintaining mechanical properties, productivity, and stretching stability equal to or superior to those of the conventional ones.

The polyethylene composition may include, for example, (a) a first ethylene-alpha olefin copolymer having a density of 0.870 g/cm$^3$ to 0.920 g/cm$^3$ and a melt index ($MI_{2.16}$, 190 °C, 2.16 kg load) of 3.0 g/10min to 10.0 g/10min; and (b) a second ethylene-alpha olefin copolymer having a density of 0.930 g/cm$^3$ to 0.960 g/cm$^3$ and a melt index ($MI_{2.16}$, 190 °C, 2.16 kg load) of 0.2 g/10min to 2.0 g/10min, which are prepared by specific metallocene catalysts, respectively.

In particular, the polyethylene composition according to one embodiment of the present disclosure, may include the first and second ethylene-alpha olefin copolymers in the specific composition, and thus may have a desirable crystalline characteristic, with a main chain weight average molecular weight of the high crystalline fraction, namely, a weight average molecular weight of a main chain of a high crystalline fraction, eluting at 90 °C or more ($Mw_{main,\ T\geq 90\ °C}$) derived from cross fractionation chromatography (CFC) analysis of the polyethylene composition in the specific range. More specifically, the polyethylene composition of this embodiment can exhibit partial crystallinity, which includes crystalline parts with a lamellar structure and amorphous parts between the crystalline parts. Such desirable crystalline characteristics of the polyethylene composition, namely, the molecular ratio included in the amorphous parts connect ing between the lamellae, may affect the physical properties such as the elasticity of the polyethylene composition.

The polyethylene composition according to one embodiment of the present disclosure may have excellent stretching properties and stretching stability, according to these aforementioned desirable crystalline characteristics. Thus, when the polyethylene composition is manufactured into a biaxially oriented film, it can exhibit excellent mechanical properties and transparency.

In a more specific example, the polyethylene composition of the aforementioned embodiment may have a main chain weight average molecular weight of the high crystalline fraction eluting at 90 °C or more ($Mw_{main,\ T\geq 90\ °C}$) derived from the cross fractionation chromatography (CFC) analysis of the polyethylene composition is 150000 g/mol or less, or from 50000 g/mol to 150000 g/mol.

Preferably, the main chain weight average molecular weight of the high crystalline fraction ($Mw_{main,\ T\geq 90°C}$) may be 140000 g/mol or less, or 135000 g/mol or less, or 130000 g/mol or less, or 125000 g/mol or less, or 120000 g/mol or less, or 118000 g/mol or less, or 115000 g/mol or less, in terms of improving the stress relaxation rate of polyethylene compositions, thereby quickly stabilizing the film during stretching and reducing the shrinkage rate. However, the main

chain weight average molecular weight of the high crystalline fraction ($Mw_{main, T\geq 90°C}$) may be 6000 g/mol or more, or 7000 g/mol or more, or 80000 g/mol or more, or 90000 g/mol or more, or 100000 g/mol or more, or 105000 g/mol or more, or 110000 g/mol or more, in terms of maintaining excellent mechanical properties of the film.

In addition, the polyethylene composition may have a content ratio of the high crystalline fraction eluting at 90 °C or more ($TREF_{\geq 90°C}$) derived from the cross fractionation chromatography (CFC) analysis of the polyethylene composition is 50% or more, or 50% or more and 95% or less of a total weight of all eluted fractions. Specifically, the content ratio of high crystalline fraction ($TREF_{\geq 90°C}$) may be 50.2% or more, 50.5% or more, or 50.9% or more of the total weight of all eluted fraction, and if necessary, 90% or less, 85% or less, 80% or less, 75% or less, 70% or less, or 65% or less of the total weight of all eluted fractions.

The polyethylene composition may have a content ratio of a medium-to-low crystalline fraction eluting at less than 90 °C ($TREF_{T<90°C}$) derived from the cross fractionation chromatography (CFC) analysis of the polyethylene composition is 50% or less, or 5% or more and 50% or less of a total weight of all eluted fractions. Specifically, the content ratio of medium-to-low crystalline fraction ($TREF_{T<90°C}$) may be 49.8% or less, or 49.5% or less, or 49.1 % or less of the total weight of all eluted fraction, and if necessary, 10% or more, or 15% or more, or 20% or more, or 25% or more, or 30% or more, or 35% or more of the total weight of all eluted fractions.

In the present disclosure, a specific test method related to a cross fractionation chromatography (CFC) is as described in Test Example 2 as described in Test Example 2 to be described later. However, the cross fractionation chromatography (CFC) is not limited thereto and may be measured by other methods known in the art to which the present invention pertains.

For example, a cross fractionation chromatography (CFC) may be performed on the polyethylene composition according to one embodiment of the present disclosure, including temperature rising elution fractionation (TREF) analysis and GPC-IR analysis in the following manner. The main chain weight average molecular weight of the high crystalline fraction eluting at 90 °C or more ($Mw_{main, T\geq 90 °C}$), the content ratio of the high crystalline fraction eluting at 90 °C or more ($TREF,_{T\geq 90 °C}$), and the content ratio ($TREF,_{T<90 °C}$) of the medium-to-low crystalline fraction eluting less than 90 °C can be measured.

**Cross fractionation chromatography (CFC) measurement conditions (including TREF and GPC-IR analysis)**

- Analysis equipment: Polymer Char CFC (Detector: Integrated Detector IR5 MCT)
- Sample preparation and injection: 32 mg of the polyethylene composition is added to a 10 mL vial, and placed in an autosampler. Then, 8 mL of 1,2,4-trichlorobenzene (TCB) is added, dissolved at 160 °C for 90 minutes, and extracted after nitrogen purge, followed by loading on a temperature rising elution fractionation column (TREF column).
- Crystallization: After adjusting the temperature of the sample previously loaded on the TREF column to 100°C, cooling is performed from 100 °C to 35 °C at 0.5 °C/min.
- Temperature rising elution temperature (TREF) analysis: The previously crystallized sample is heated at 1 °C intervals from 35 °C to 120°C, and fixed. Then, the fractions eluted at each temperature for 25 minutes are analyzed. Specifically, it is extracted at 35 °C for 25 minutes and analyzed, then extracted and analyzed after raising the temperature at 1 °C intervals, and finally extracted at 120 °C for 25 minutes and analyzed.
- GPC-IR analysis: The fractions eluted at each temperature in the previous TREF analysis are transferred to a GPC column of the GPC (PL-GPC220) device, the molecular weight of the eluted molecules is measured, and the number of short-chain branches (scb) of the eluted molecules at each temperature is measured using a PerkinElmer Spectrum 100 FT-IR connected to the GPC (PL-GPC220).
- Main chain weight average molecular weight of the high crystalline fraction ($Mw_{main, T\geq 90 °C}$): From the results confirmed through CFC analysis of the polyethylene composition, the value of the weight-average molecular weight of the main chain (excluding short-chain branch) of the fractions eluted at 90 °C or more ($Mw_{main,T\geq 90°C}$, g/mol) of the polyethylene composition is calculated by the following Equation 1.

[Equation 1]

$$Mw_{main,T\geq 90℃}\ (g/mol) = \frac{\sum_{T=90℃}\sum_i (M_{T,i} - M_{scb} * n_{T,i}^{scb}) * C_{T,i}}{\sum_{T=90℃}\sum_i C_{T,i}}$$

In Equation 1,

$M_{T,i}$ and $C_{T,i}$ are the weight-average molecular weight (g/mol) and concentration average molecular weight (g/mol)

and concentration of each fraction eluted at each measured temperature, respectively, obtained through the above CFC analysis of the polyethylene composition,

$n^{scb}_{T,i}$ is the number of branch chains (scb) of each fraction eluted at each measured temperature, respectively, obtained through the above CFC analysis of the polyethylene composition, and

$M_{scb}$ is the weight-average molecular weight (g/mol) of branch chains (scb) of each fraction eluted at each measured temperature, respectively, obtained through the above CFC analysis of the polyethylene composition.

Specifically, the content ratio of high crystalline fractions ($TREF_{\geq 90°C}$) of the polyethylene composition, based on the total weight of all eluted fractions of the polyethylene composition obtained through the above CFC analysis, is calculated the content ratio of high crystalline fractions eluting at 90 °C or more ($TREF_{\geq 90°C}$) as a percentage (%). The content ratio of medium-to-low crystalline fractions ($TREF_{<90°C}$) of the polyethylene composition, based on the total weight of all eluted fractions of the polyethylene composition obtained through the above CFC analysis, is calculated the content ratio of high crystalline fractions eluting at less than 90 °C ($TREF_{<90°C}$) as a percentage (%).

Meanwhile, the polyethylene composition may have a relaxation time ($RT_{120°C}$) at 120 °C of 4.0 seconds or less, or 0.02 seconds or more and 4.0 seconds or less. Preferably, the relaxation time ($RT_{120°C}$) at 120 °C may be 3.8 seconds or less, or 3.5 seconds or less, or 3.2 seconds or less, or 3.0 seconds or less, or 2.5 seconds or less, in terms of improving the stress relaxation rate of polyethylene compositions, thereby quickly stabilizing the film during stretching and reducing the shrinkage rate. However, the relaxation time ($RT_{120°C}$) at 120 °C may be 0.1 seconds or more, or 0.5 seconds or more, or 1.0 seconds or more, or 1.2 seconds or more, or 1.5 seconds or more, or 1.8 seconds or more, or 2.0 seconds or more, in terms of maintaining excellent mechanical properties of the film.

The relaxation time of the polyethylene composition can be obtained by measuring a viscosity of the polyethylene composition using a rotational rheometer under conditions of various temperatures and angular frequencies ranging from 0.05 rad/s to 500 rad/s, and then calculating the relaxation time (seconds) of the polyethylene polyethylene composition using a specific cross model. Alternatively, a relaxation time (seconds) of the polyethylene composition at the specific temperature can be estimated through an Arrhenius plot based on the values of the relaxation time (seconds) under conditions of various temperatures as described above. For example, a specific method for measuring the relaxation time of the polyethylene composition is as described in Test Example 2 as described in Test Example 2 to be described later. However, the method for measuring the relaxation time of the polyethylene composition is not limited thereto and may be measured by other methods known in the art to which the present invention pertains.

Meanwhile, the polyethylene composition may have a density of 0.928 g/cm$^3$ or more and 0.942 g/cm$^3$ or less. Preferably, the density may be 0.929 g/cm$^3$ or more, 0.930 g/cm$^3$ or more, or 0.931 g/cm$^3$ or more, and 0.940 g/cm$^3$ or less, 0.939 g/cm$^3$ or less, 0.938 g/cm$^3$ or less.

In the present disclosure, the density (g/cm$^3$) can be measured using a density gradient column according to ASTM D 1505 (American Society for Testing and Materials). As an example, a method for measuring the density (g/cm$^3$) is as described in Test Examples 1 and 2 to be described later.

In addition, the polyethylene composition may have a melt index ($MI_{2.16}$, 190 °C, 2.16 kg load) of 0.6 g/10min to 1.5 g/10min. Preferably, the melt index ($MI_{2.16}$, 190 °C, 2.16 kg load) may be 0.65 g/10min or more, 0.7 g/10min or more, or 0.75 g/10min or more, and 1.4 g/10min or less, 1.3 g/10min or less, or 1.2 g/10min or less.

In the present disclosure, the melt index ($MI_{2.16}$) can be measured at 190 °C under a load of 2.16 kg according to ASTM D 1238 (condition E, 190 °C, 2.16 kg) of the American Society for Testing and Materials. For example, a method for measuring the melt index ($MI_{2.16}$) is as described in Test Examples 1 and 2 to be described later.

In addition, the polyethylene composition may have a number average molecular weight (Mn) of 25000 g/mol or more, or 25000 g/mol to 500000 g/mol; and a weight average molecular weight (Mw) of 105000 g/mol or more, or from 105000 g/mol to 1000000 g/mol; and a molecular weight distribution (Mw/Mn) of 5.0 or less, or 0.5 to 5.0.

Preferably, the molecular weight distribution (Mw/Mn) of the polyethylene composition may be 4.8 or less, or 4.5 or less, or 4.3 or less, or 4.0 or less, or 3.8 or less. In addition, the molecular weight distribution (Mw/Mn) may be 1.0 or more, or 1.2 or more, or 1.5 or more, or 1.8 or more, or 2.0 or more, or 2.5 or more, or 2.8 or more, or 3.0 or more.

In the present disclosure, the weight average molecular weight (Mw) and the number average molecular weight (Mn) are values converted with standard polystyrene measured by GPC (gel permeation chromatography). However, the weight average molecular weight is not limited thereto and may be measured by other methods known in the art. As an example, a method for measuring the weight average molecular weight (Mw) and the number average molecular weight (Mn) is as described in Test Examples 1 and 2 to be described later.

For examples, the weight average molecular weight (Mw) and the number average molecular weight (Mn) can be measured using gel permeation chromatography (GPC, manufactured by Water), according to ASTM D 6474 of the American Society for Testing and Materials. Specifically, PL-GPC220 manufactured by Waters may be used as the gel permeation chromatography (GPC) instrument, and a Polymer Laboratories PLgel MIX-B 300 mm length column may be used. An evaluation temperature may be 160 °C, and 1,2,4-trichlorobenzene may be used for a solvent at a flow rate of 1 mL/min. Each polyethylene sample may be pretreated by dissolving in 1,2,4-trichlorobenzene containing 0.0125% of BHT

at 160 °C for 10 hours using a GPC analyzer (PL-GP220), and the sample with a concentration of 10 mg/10 mL may be supplied in an amount of 200 microliters (μL). Mw and Mn may be obtained using a calibration curve formed using a polystyrene standard. 9 kinds of the polystyrene standard are used with the molecular weight of 2000 g/mol, 10000 g/mol, 30000 g/mol, 70000 g/mol, 200000 g/mol, 700000 g/mol, 2000000 g/mol, 4000000 g/mol, 10000000 g/mol.

In addition, the polyethylene composition may have a melting point (Tm) of 125 °C to 129 °C, a crystallization temperature (Tc) of 112 °C to 115 °C, and a crystallinity (Xc) of 35% to 48%.

In the present disclosure, the melting point Tm, the crystallization temperature Tc, and the crystallinity Xc can be measured using a differential scanning calorimeter (DSC). For example, a method for measuring the melting point Tm, the crystallization temperature Tc, and the crystallinity Xc is as described in Test Example 2 to be described later.

For example, the melting temperature (Tm), crystallization temperature (Tc) and crystallinity (Xc) of the polyethylene composition can be measured using a differential scanning calorimeter (DSC, device name: DSC Q20, manufacturer: TA instrument). Specifically, the polyethylene composition is heated to 180 °C at 10 °C/min (Cycle 1), isothermal at 180 °C for 5 minutes, cooled to 0 °C at 10 °C/min, isothermal at 30 °C for 5 minutes, and then heated again to 180 °C at 10 °C/min (Cycle 2). In the DSC curve obtained above, the temperature at the maximum point of the endothermic peak is measured as the melting temperature (Tm, °C), and the temperature at the maximum point of the exothermic peak was measured as the crystallization temperature (Tc, °C). At this time, the melting temperature (Tm) and the crystallization temperature (Tc) are shown as the results measured in Cycle 2 in which the second temperature rises and falls.

In addition, the heat of fusion ΔHm was obtained by calculating the area of the melting peak in Cycle 2 in which the second temperature rises, and the crystallinity (Xc, %) can be calculated by dividing ΔHm by $H^0m$ = 293.6 J/g, which is the theoretical value when the crystallinity is 100%.

Meanwhile, the polyethylene composition according to one embodiment of the present disclosure includes the first ethylene-alpha olefin copolymer (a) in an amount of more than 0 and 40 wt% or less, and the second ethylene-alpha olefin copolymer (b) in an amount of 60 wt% or more and less than 100 wt%.

Preferably, the first ethylene-alpha olefin copolymer (a) may be included in an amount of 5 wt% or more, 10 wt% or more, or 15 wt% or more, and 38 wt% or less, 35 wt% or less, or 30 wt% or less.

In addition, the second ethylene-alpha olefin copolymer (b) may be included in an amount of 62 wt% or more, 65 wt% or more, or 70 wt% or more, and 85 wt% or less, 90 wt% or less, or 95 wt% or less.

When combining the first and second ethylene-alpha olefin copolymers in an appropriate amount, the composition of one embodiment can satisfy an appropriate crystal structure, and thus can satisfy all the excellent physical properties described above.

In the polyethylene composition, the first and second ethylene-alpha olefin copolymers may each be a copolymer of ethylene and an alpha olefin having 3 to 20 carbon atoms. In a more specific embodiment, it may be a copolymer of ethylene and 1-butene, 1-hexene or 1-octene. In a specific embodiment, these first and second ethylene-alpha olefin copolymers may be the same or different from each other. For example, the first ethylene-alpha olefin copolymer (a) may comprise an ethylene/1-octene copolymer, and the second ethylene-alphaolefin copolymer (b) may comprise an ethylene/1-hexene copolymer.

## First ethylene-alpha olefin copolymer (a)

In the polyethylene composition according to an embodiment of the present disclosure, the first ethylene-alpha olefin copolymer (a) has excellent flowability to have excellent stretching stability and shrinkage resistance and may impart characteristics suitable for manufacturing a biaxially stretched film.

Specifically, the first ethylene-alpha olefin copolymer (a) has a density of 0.870 g/cm$^3$ to 0.920 g/cm$^3$ and a melt index ($MI_{2.16}$, 190 °C, 2.16 kg load) of 3.0 g/10min to 10.0 g/10 min.

Preferably, the first ethylene-alpha olefin copolymer (a) may have a density of 0.880 g/cm$^3$ or more, 0.890 g/cm$^3$ or more, or 0.895 g/cm$^3$ or more, and 0.915 g/cm$^3$ or less, 0.910 g/cm$^3$ or less, or 0.905 g/cm$^3$ or less.

In addition, the first ethylene-alpha olefin copolymer (a) may have a melt index ($MI_{2.16}$, 190 °C, 2.16 kg load) of 3.5 g/10min or more, 4.0 g/10min or more, or 4.5 g/10min or more, and 9.0 g/10min or less, 8.0 g/10min or less, or 7.0 g/10min or less.

The first ethylene-alpha olefin copolymer (a) may have a number average molecular weight (Mn) of 20000 g/mol or more, or 20000 g/mol or more and 50000 g/mol or less, a weight average molecular weight (Mw) of 60000 g/mol or more and 95000 g/mol or less, and a molecular weight distribution (Mw/Mn) of 2.0 or more and less than 3.5.

Preferably, the number average molecular weight (Mn) of the first ethylene-alpha olefin copolymer (a) may be 22000 g/mol or more, 25000 g/mol or more, or 28000 g/mol or more, and 34000 g/mol or less, 33000 g/mol or less, or 32000 g/mol or less.

The weight average molecular weight (Mw) of the first ethylene-alpha olefin copolymer (a) may be 62000 g/mol or more, 64000 g/mol or more, or 65000 g/mol or more, and 90000 g/mol or less, 80000 g/mol or less, or 70000 g/mol or less.

In addition, the molecular weight distribution (Mw/Mn) of the first ethylene-alpha olefin copolymer (a) may be 2.1

or more, 2.2 or more, or 2.3 or more, and 3.2 or less, 3.0 or less, 2.8 or less, or 2.5 or less.

The first ethylene-alpha olefin copolymer (a) may have at least one of the above-described physical properties, and may have all of the above-described physical properties to exhibit excellent mechanical strength.

Here, the method for measuring each physical property of the first ethylene-alpha olefin copolymer (a) is the same as previously described for the polyethylene composition, and therefore, a detailed explanation is omitted.

The first ethylene-alpha olefin copolymer (a) may include at least one alpha-olefin selected from the group consisting of 1-butene, 1-pentene, 1-hexene, 4-methyl-1-pentene, 1-octene, 1-decene, 1-dodecene, 1-tetradecene, 1-hexadecene, 1-octadecene, 1-eicosene, and a mixture thereof together with ethylene.

Preferably, the first ethylene-alpha olefin copolymer (a) may comprise an ethylene/1-octene copolymer.

When the first ethylene-alpha olefin copolymer (a) is the above-described copolymer, the above-described physical properties can be more easily achieved. However, the type of the first ethylene-alpha olefin copolymer (a) is not limited thereto, and various types known in the art may be used as long as they can exhibit the above-mentioned physical properties.

Meanwhile, the first ethylene-alpha olefin copolymer (a) may be prepared in the presence of a metallocene catalyst.

Specifically, the first ethylene-alpha olefin copolymer (a) may be prepared by copolymerizing ethylene and a comonomer in the presence of a catalyst composition including a metallocene compound represented by the following Chemical Formula 1:

[Chemical Formula 1]

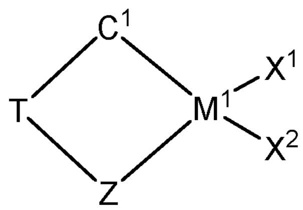

in Chemical Formula 1,

$M^1$ is a Group 4 transition metal;

$X^1$ and $X^2$ are the same as or different from each other, and are each independently halogen, a nitro group, an amido group, a phosphine group, a phosphide group, a C1 to C30 hydrocarbyl group, a C1 to C30 hydrocarbyloxy group, a C2 to C30 hydrocarbyloxyhydrocarbyl group, $-SiH_3$, a C1 to C30 hydrocarbyl(oxy)silyl group, a C1 to C30 sulfonate group, or a C1 to C30 sulfone group;

Z is -O-, -S-, $-NR_a-$, or $-PR_a-$;

$R_a$ is any one of hydrogen, a C1 to C20 hydrocarbyl group, a C1 to C20 hydrocarbyl(oxy)silyl group, and a C1 to C20 silylhydrocarbyl group;

T is

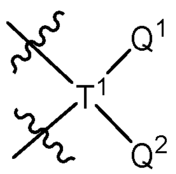 or 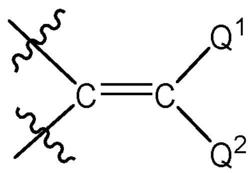 ,

$T^1$ is C, Si, Ge, Sn or Pb,

$Q^1$ and $Q^2$ are the same as or different from each other, and are each independently any one of hydrogen, a C1 to C30 hydrocarbyl group, a C1 to C30 hydrocarbyloxy group, a C2 to C30 hydrocarbyloxyhydrocarbyl group, $-SiH_3$, a C1 to C30 hydrocarbyl(oxy)silyl group, a halogen-substituted C1 to C30 hydrocarbyl group and $-NR_bR_c$;

$R_b$ and $R_c$ are each independently at least one of hydrogen and a C1 to C30 hydrocarbyl group, or are connected with each other to form an aliphatic or aromatic ring; and

$C^1$ is any one of the ligands represented by the following Chemical Formulae 1a to 1d,

[Chemical Formula 1a]

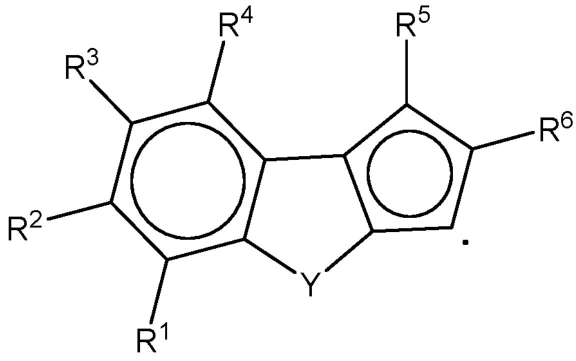

[Chemical Formula 1b]

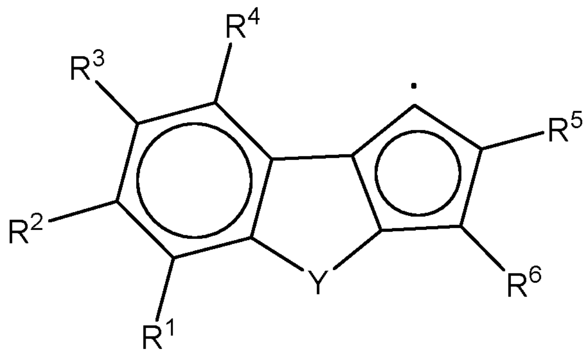

[Chemical Formula 1c]

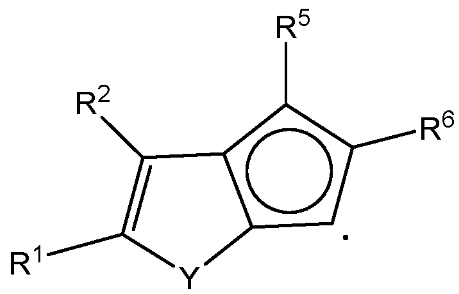

[Chemical Formula 1d]

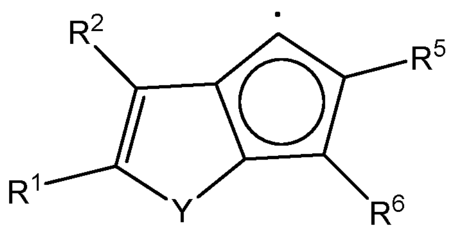

in Chemical Formulae 1a to 1d,
Y is O or S, and
$R^1$ to $R^6$ are the same as or different from each other, and are each independently any one of hydrogen, a C1 to C30

hydrocarbyl group, and a C1 to C30 hydrocarbyloxy group.

Unless otherwise specified herein, following terms may be defined as follows.

The hydrocarbyl group is a monovalent functional group in a hydrogen-removed form from a hydrocarbon, and may include an alkyl group, an alkenyl group, an alkynyl group, an aryl group, an aralkyl group, an aralkenyl group, an aralkynyl group, an alkylaryl group, an alkenylaryl group, an alkynylaryl group, and the like. The C1 to C30 hydrocarbyl group may be a C1 to C20 or C1 to C10 hydrocarbyl group. For example, the hydrocarbyl group may be a linear, branched or cyclic alkyl. More specifically, the C1 to C30 hydrocarbyl group may be a linear, branched or cyclic alkyl group such as a methyl group, an ethyl group, an n-propyl group, an iso-propyl group, an n-butyl group, an iso-butyl group, a tert-butyl group, an n-pentyl group, an n- hexyl group, an n-heptyl group and a cyclohexyl group; or an aryl group such as phenyl, biphenyl, naphthyl, anthracenyl, phenanthrenyl, or fluorenyl. Moreover, it may be alkylaryl such as methylphenyl, ethylphenyl, methylbiphenyl, and methylnaphthyl, or arylalkyl such as phenylmethyl, phenylethyl, biphenylmethyl, and naphthylmethyl. It may also be alkenyl such as allyl, ethenyl, propenyl, butenyl, and pentenyl.

The hydrocarbyloxy group is a functional group in which the hydrocarbyl group is bonded to oxygen. Specifically, the C1 to C30 hydrocarbyloxy group may be a C1 to C20 or C1 to C10 hydrocarbyloxy group. For example, the hydrocarbyloxy group may be a linear, branched or cyclic alkyl. More specifically, the C1 to C30 hydrocarbyloxy group may be a linear, branched or cyclic alkoxy group such as a methoxy group, an ethoxy group, an n-propoxy group, an iso-propoxy group, an n-butoxy group, an iso-butoxy group, a tert-butoxy group, an n-pentoxy group, an n-hexyloxy group, an n-heptoxy group and a cyclohexyloxy group; or an aryloxy group such as a phenoxy group and a naphthalenoxy group.

The hydrocarbyloxyhydrocarbyl group is a functional group in which at least one hydrogen of the hydrocarbyl group is substituted with at least one hydrocarbyloxy group. Specifically, the C2 to C30 hydrocarbyloxyhydrocarbyl group may be a C2 to C20 or C2 to C15 hydrocarbyloxyhydrocarbyl group. For example, the hydrocarbyloxyhydrocarbyl group may be a linear, branched or cyclic alkyl. More specifically, the C2 to C30 hydrocarbyloxyhydrocarbyl group may be an alkoxyalkyl group such as a methoxymethyl group, a methoxyethyl group, an ethoxymethyl group, an iso-propoxymethyl group, an iso-propoxyethyl group, an iso-propoxyhexyl group, a tert-butoxymethyl group, a tert-butoxyethyl group and a tert-butoxyhexyl group; or an aryloxyalkyl group such as a phenoxyhexyl group.

The hydrocarbyl(oxy)silyl group is a functional group in which one to three hydrogens of $-SiH_3$ are substituted with one to three hydrocarbyl or hydrocarbyloxy groups. Specifically, the C1 to C30 hydrocarbyl(oxy)silyl group may be a C1 to C20, C1 to C15, C1 to C10, or C1 to C5 hydrocarbyl(oxy)silyl group. More specifically, the C1 to C30 hydrocarbyl(oxy)silyl group may be an alkylsilyl group such as a methylsilyl group, a dimethylsilyl group, a trimethylsilyl group, a dimethylethylsilyl group, a diethylmethylsilyl group, or a dimethylpropylsilyl group; an alkoxysilyl group such as a methoxysilyl group, a dimethoxysilyl group, a trimethoxysilyl group, or a dimethoxyethoxysilyl group; or an alkoxyalkylsilyl group such as a methoxydimethylsilyl group, a diethoxymethylsilyl group, or a dimethoxypropylsilyl group.

The C1 to C20 silylhydrocarbyl group is a functional group in which at least one hydrogen of the hydrocarbyl group is substituted with a silyl group. The silyl group may be $-SiH_3$ or a hydrocarbyl(oxy)silyl group. Specifically, the C1 to C20 silylhydrocarbyl group may be a C1 to C15 or C1 to C10 silylhydrocarbyl group. More specifically, C1 to C20 silylhydrocarbyl group may be a silylalkyl group such as $-CH_2-SiH_3$; an alkylsilylalkyl group such as a methylsilylmethyl group, a methylsilylethyl group, a dimethylsilylmethyl group, a trimethylsilylmethyl group, a dimethylethylsilylmethyl group, a diethylmethylsilylmethyl group, or a dimethylpropylsilylmethyl group; or an alkoxysilylalkyl group such as a dimethylethoxysilylpropyl group.

The halogen may be fluorine (F), chlorine (Cl), bromine (Br) or iodine (I).

The sulfonate group has a structure of $-O-SO_2-R_d$, and $R_d$ may be a C1 to C30 hydrocarbyl group. Specifically, the C1 to C30 sulfonate group may be a methanesulfonate group, a phenylsulfonate group, or the like.

The C1 to C30 sulfone group has a structure of $-R^{e'}-SO_2-R^{e''}$, and $R^{e'}$ and $R^{e''}$ may be the same as or different from each other, and may each independently be any one of a C1 to C30 hydrocarbyl group. Specifically, the C1 to C30 sulfone group may be a methylsulfonylmethyl group, a methylsulfonylpropyl group, a methylsulfonylbutyl group, a phenylsulfonylpropyl group, or the like.

In this disclosure, "two neighboring substituents are connected with each other to form an aliphatic or aromatic ring" means that the atom(s) of two substituents and the atom(s) to which the two substituents are bonded are connected with each other to form a ring. Specifically, examples in which $R_b$ and $R_c$ or $R_{b'}$ and $R_{c'}$ of $-NR_bR_c$ or $-NR_{b'}R_{c'}$ are connected with each other to form an aliphatic ring include a piperidinyl group, and examples in which $R_b$ and $R_c$ or $R_{b'}$ and $R_{c'}$ of $-NR_bR_c$ or $-NR_{b'}R_{c'}$ are connected with each other to form an aromatic ring include a pyrrolyl group.

The Group 4 transition metal may be titanium (Ti), zirconium (Zr), hafnium (Hf), or rutherfordium (Rf), and may specifically be titanium (Ti), zirconium (Zr), or hafnium (Hf). More specifically, it may be zirconium (Zr), or hafnium (Hf), but the present disclosure is not limited thereto.

Further, the Group 13 element may be boron (B), aluminum (Al), gallium (Ga), indium (In), or thallium (Tl), and may specifically be boron (B) or aluminum (Al), but the present disclosure is not limited thereto.

The above-mentioned substituents may optionally be substituted with one or more substituents selected from the

group consisting of a hydroxyl group; halogen; a hydrocarbyl group; a hydrocarbyloxy group; a hydrocarbyl group or a hydrocarbyloxy group containing at least one heteroatom of Group 14 to 16 heteroatoms; a silyl group; a hydrocarbyl(oxy) silyl group; a phosphine group; a phosphide group; a sulfonate group; and a sulfone group within the range of exhibiting the same or similar effect as the desired effect.

In the present disclosure, substituent.

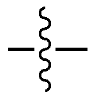

means a bond connected to another

Specifically, in Chemical Formula 1, Z is $-NR_a-$, wherein the $R_a$ may be a C1 to C10 hydrocarbyl group. Specifically, the $R_a$ may be a linear or branched C1 to C6 alkyl group. More specifically, it may be a tert-butyl group.

In Chemical Formula 1, T is

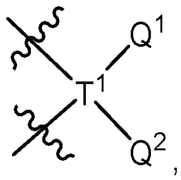

wherein $T^1$ is carbon (C) or silicon (Si), $Q^1$ and $Q^2$ may each independently be hydrogen, a C1 to C30 hydrocarbyl group, or a C1 to C30 hydrocarbyloxy group. Specifically, $Q^1$ and $Q^2$ may each be a C1 to C10 hydrocarbyl group or a C2 to C12 hydrocarbyloxyhydrocarbyl group. More specifically, $Q^1$ and $Q^2$ may each be a C1 to C6 alkyl group, or a C1 to C6 alkoxy-substituted C1 to C6 alkyl group. For example, $Q^1$ and $Q^2$ may each independently be hydrogen, methyl, ethyl, or tert-butoxy-substituted hexyl. More specifically, $T^1$ is silicon (Si); both $Q^1$ and $Q^2$ are methyl, or one of $Q^1$ and $Q^2$ is methyl and the other is tert-butoxy-substituted hexyl.

Specifically, the metallocene compound represented by the Chemical Formula 1 may be a compound represented by any one of the following Chemical Formulae 1-1 to 1-4.

[Chemical Formula 1-1]

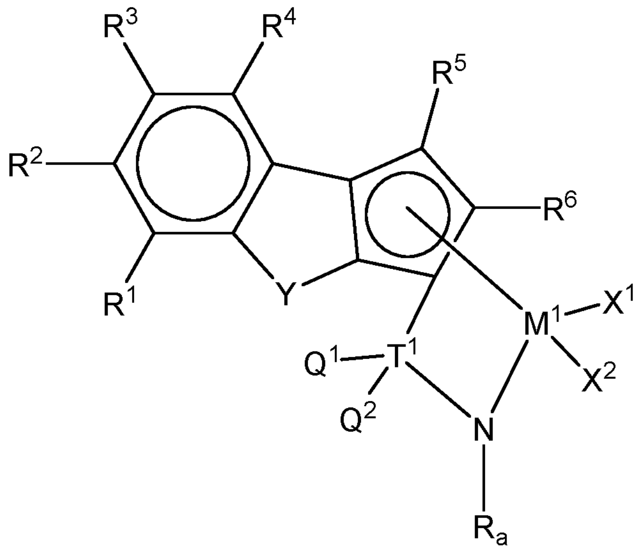

[Chemical Formula 1-2]

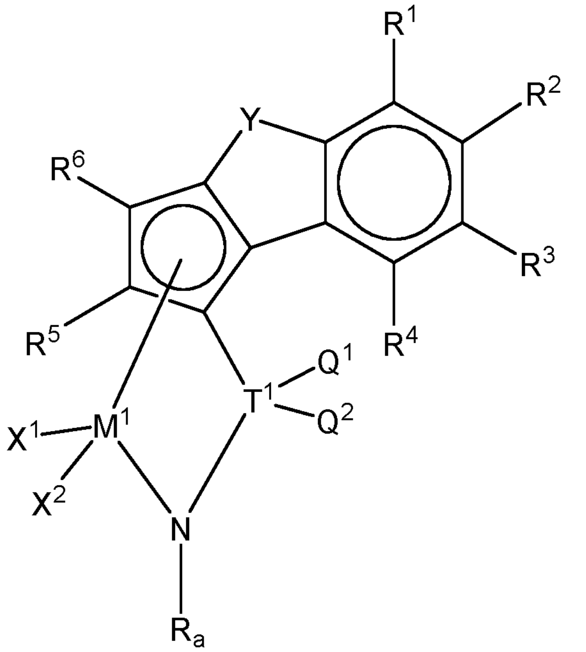

[Chemical Formula 1-3]

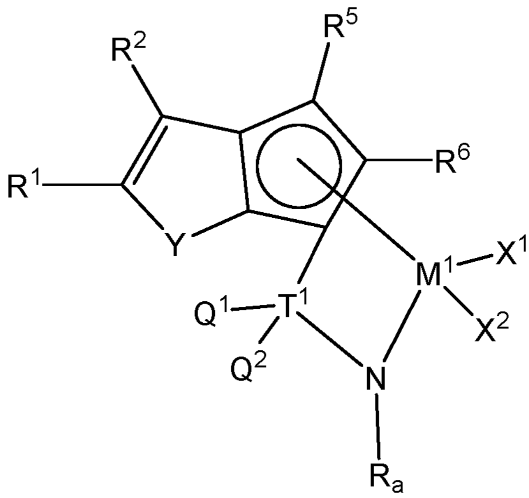

[Chemical Formula 1-4]

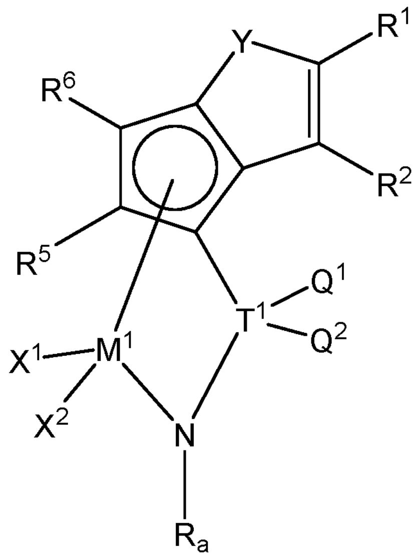

In Chemical Formulae 1-1 to 1-4, $M^1$, $X^1$, $X^2$, $R_a$, $T^1$, $Q^1$, $Q^2$, Y, and $R^1$ to $R^6$ are the same as defined in Chemical Formula 1.

In Chemical Formula 1, $R^1$ to $R^4$ may each be hydrogen or a C1 to C10 hydrocarbyl group, and $R^5$ and $R^6$ may each be a C1 to C10 hydrocarbyl group. Specifically, $R^1$ to $R^4$ may each be hydrogen or C1 to C10 alkyl, and $R^5$ and $R^6$ may each be C1 to C10 alkyl. More specifically, $R^1$ to $R^4$ may each be hydrogen or methyl, and $R^5$ and $R^6$ may be methyl.

In Chemical Formula 1, $M^1$ may be titanium (Ti), zirconium (Zr) or hafnium (Hf), and preferably titanium (Ti).

In addition, in Chemical Formula 1, each of $X^1$ and $X^2$ may be halogen, a C1 to C10 alkyl group, or a C1 to C6 alkyl group, and specifically chlorine or methyl.

In addition, in Chemical Formula 1, the metallocene compound may be represented by one of the following structural formulae.

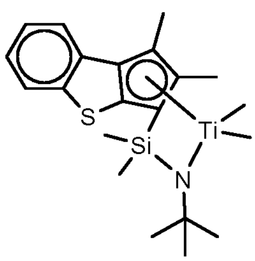

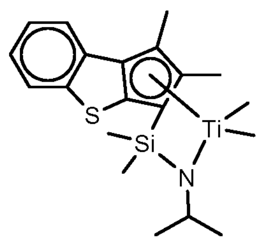

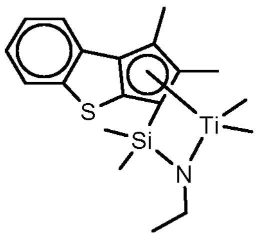

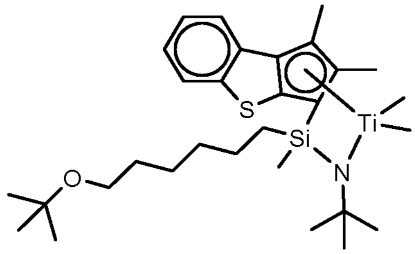

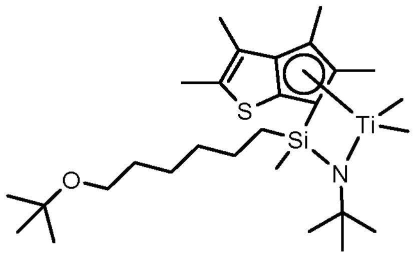

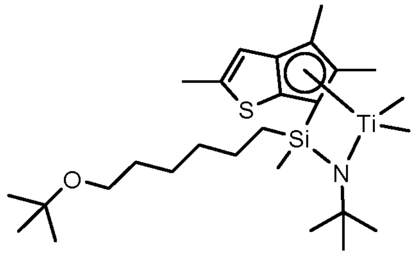

The metallocene compound represented by the above structural formulae may be synthesized by applying known reactions, and a more detailed synthesis method may be understood with reference to Examples and Synthesis Examples.

As described above, the transition metal compound represented by Chemical Formula 1 used in the present disclosure controls the degree of introduction of alpha-olefin monomers in the copolymerization process due to the structural characteristics of the catalyst and exhibits the above-described density, resulting in excellent flowability and stretching processability.

In the present disclosure, the polymerization reaction may be performed by continuously polymerizing ethylene and alpha-olefin monomers while continuously introducing hydrogen in the presence of a catalyst composition containing at least one transition metal compound represented by the Chemical Formula 1. Specifically, it may be performed while introducing hydrogen at 5 to 100 cc/min.

The hydrogen gas suppresses a rapid reaction of the transition metal compound at the initial stage of polymerization, and serves to terminate the polymerization reaction. Accordingly, an ethylene/alpha-olefin copolymer having a narrow molecular weight distribution can be effectively produced by using the hydrogen gas and adjusting the amount thereof.

For example, the hydrogen may be introduced at 5 cc/min or more, 7 cc/min or more, 10 cc/min or more, 15 cc/min or more, or 19 cc/min or more, and 100 cc/min or less, 50 cc/min or less, 45 cc/min or less, 35 cc/min or less, or 29 cc/min or less. When added under the above conditions, the ethylene/alpha-olefin copolymer to be produced can realize the physical properties of the present disclosure.

When the hydrogen gas is introduced at less than 5 cc/min, the polymerization reaction is not uniformly terminated, making it difficult to prepare an ethylene/alpha-olefin copolymer having desired physical properties. When the hydrogen gas is introduced at more than 100 cc/min, the termination reaction occurs too quickly, and thus an ethylene/alpha-olefin copolymer having a very low molecular weight may be produced.

In addition, the polymerization reaction may be performed at 100 °C to 200 °C, and the crystallinity distribution and the molecular weight distribution in the ethylene/alpha-olefin copolymer may be more easily controlled by adjusting the polymerization temperature together with the hydrogen input. Specifically, the polymerization reaction may be performed at 100 °C to 200 °C, 120 °C to 180 °C, 130 °C to 170 °C, or 140 °C to 160 °C, but is not limited thereto.

In the present disclosure, a cocatalyst may be additionally used in the catalyst composition to activate the transition metal compound of the Chemical Formula 1. The cocatalyst is an organometallic compound containing a Group 13 metal, and may specifically include one or more selected from Chemical Formulae 2 to 4 below.

[Chemical Formula 2] $R_8\text{-}[Al(R_7)\text{-}O]_n\text{-}R_9$

in Chemical Formula 2,

$R_7$, $R_8$ and $R_9$ are each independently hydrogen, halogen, $C_{1-20}$ hydrocarbyl, or halogen-substituted $C_{1-20}$ hydrocarbyl, and
n is an integer of 2 or more,

[Chemical Formula 3] $D(R_{10})_3$

in Chemical Formula 3,

D is aluminum or boron, and
$R_{10}$ are each independently halogen, $C_{1-20}$ hydrocarbyl, $C_{1-20}$ hydrocarbyloxy, or halogen-substituted $C_{1-20}$ hydrocarbyl,

[Chemical Formula 4] $[L-H]^+[W(A)_4]^-$ or $[L]^+[W(A)_4]^-$

in Chemical Formula 4,

L is a neutral or cationic Lewis base,
H is a hydrogen atom,
W is a group 13 element, and
A are each independently any one of $C_{1-20}$ hydrocarbyl; $C_{1-20}$ hydrocarbyloxy; and a substituent in which one or more hydrogen atoms of these substituents are substituted with one or more substituents selected from halogen, $C_{1-20}$ hydrocarbyloxy and $C_{1-20}$ hydrocarbyl(oxy)silyl.

Specifically, in Chemical Formula 4, $[L-H]^+$ is a Bronsted acid.

For example, the $[L-H]^+$ is trimethylammonium; triethylammonium; tripropylammonium; tributylammonium; diethylammonium; trimethylphosphonium; or triphenylphosphonium, wherein $[L]^+$ is N,N-diethylanilinium; or triphenylcarbonium.

In addition, in Chemical Formula 4, W may be $B^{3+}$ or $Al^3$.

The compound represented by the Chemical Formula 2 may function as an alkylating agent and an activating agent, the compound represented by the Chemical Formula 3 may function as an alkylating agent, and the compound represented by the Chemical Formula 4 may function as an activating agent.

More specifically, the compound of Chemical Formula 2 may be an alkylaluminoxane-based compound in which repeating units are bonded in a linear, circular or network shape, and specific examples thereof may include methylaluminoxane (MAO), ethylaluminoxane, isobutylaluminoxane or tert-butylaluminoxane and the like. Non-limiting examples of the compound represented by Chemical Formula 4 may include methyl aluminoxane, ethyl aluminoxane, isobutyl aluminoxane, tert-butyl aluminoxane, and the like.

In addition, non-limiting examples of the compound represented by Chemical Formula 3 may include trimethylaluminum, triethylaluminum, triisobutylaluminum, tripropylaluminum, tributylaluminum, dimethylchloroaluminum, triisopropylaluminum, trisec-butylaluminum, tricyclopentyl aluminum, tripentyl aluminum, triisopentyl aluminum, trihexyl aluminum, trioctyl aluminum, ethyldimethyl aluminum, methyl diethyl aluminum, triphenyl aluminum, tri-p-tolyl aluminum, dimethyl aluminum methoxide, dimethyl aluminum ethoxide, and the like.

In addition, non-limiting examples of the compound represented by Chemical Formula 4 may include trimethylammonium tetrakis(pentafluorophenyl)borate, triethylammonium tetrakis(pentafluorophenyl)borate, N,N-dimethylanilinium tetrakis (pentafluorophenyl) borate, N,N-dimethylanilinium n-butyltris(pentafluorophenyl) borate, N,N-dimethylanilinium benzyltris(pentafluorophenyl)borate, N,N-dimethylanilinium tetrakis(4-(t-butyldimethylsilyl)-2,3,5,6-tetrafluorophenyl)borate, N,N-dimethylanilinium tetrakis(4-(triisopropylsilyl)-2,3,5,6-tetrafluorophenyl)borate, N,N-dimethylanilinium pentafluorophenoxytris(pentafluorophenyl)borate, N,N-dimethyl-2,4,6-trimethylanilinium tetrakis(pentafluorophenyl)borate, trimethylammonium tetrakis(2,3,4,6-tetrafluorophenyl) borate, N,N-dimethylanilinium tetrakis(2,3,4,6-tetrafluorophenyl)borate, hexadecyldimethylammonium tetrakis(pentafluorophenyl)borate, N-methyl-N-dodecylanilinium tetrakis(pentafluorophenyl)borate, methyldi(dodecyl)ammonium tetrakis(pentafluorophenyl)borate, and the like.

Among the above compounds, the cocatalyst may be, more specifically, an alkylaluminoxane-based cocatalyst such as methylaluminoxane.

The amount of the cocatalyst used may be appropriately adjusted according to the physical properties or effects of the desired hybrid supported metallocene catalyst.

The cocatalyst may be used in an appropriate amount so that the activation of the transition metal compound of Chemical Formula 1 can sufficiently proceed. The amount of the cocatalyst used may be appropriately adjusted according to the physical properties or effects of the desired hybrid supported metallocene catalyst or catalyst composition.

In the present disclosure, the transition metal compound of Chemical Formula 1 may be used in a state supported on the support.

When the transition metal compound of Chemical Formula 1 is supported on a support, a weight ratio of the

transition metal compound and the support may be 1:10 to 1:1000, more specifically 1:10 to 1:500. When the support and the transition metal compound are included within the above weight ratio, an optimal shape can be exhibited. In addition, when the cocatalyst is supported on the support, a weight ratio of the cocatalyst and the support may be 1:1 to 1:100, more specifically 1:1 to 1:50. When the cocatalyst and the support are included within the above weight ratio, it is possible to improve the activity of the catalyst and to optimize the microstructure of the polymer to be produced.

Meanwhile, the support may be silica, alumina, magnesia or a mixture thereof, or may be used in a state containing highly reactive hydroxyl groups or siloxane groups on its surface by removing moisture from the surface after drying these materials at a high temperature. Further, the support dried at a high temperature commonly contains oxide, carbonate, sulfate, and nitrate such as $Na_2O$, $K_2CO_3$, $BaSO_4$, $Mg(NO_3)_2$, and the like.

A drying temperature of the support may preferably be about 200 °C to 800 °C, more preferably about 300 °C to 600 °C, and most preferably about 300 to 400 °C. When the drying temperature of the support is less than 200 °C, surface moisture may react with the cocatalyst due to excessive moisture. When it is greater than 800 °C, pores on the surface of the support may be combined to reduce the surface area, and a lot of hydroxyl groups may be lost on the surface and only siloxane groups may remain, thus decreasing the reaction sites with the cocatalyst, which is not preferable.

The amount of the hydroxyl groups on the surface of the support may preferably be 0.1 mmol/g to 10 mmol/g, more preferably 0.5 mmol/g to 5 mmol/g. The amount of the hydroxyl groups on the surface of the support may be controlled by the preparation method and conditions of the support, or drying conditions, for example, temperature, time, vacuum, spray drying, or the like.

In addition, an organoaluminum compound is further added during the polymerization reaction to remove moisture from the reactor, and the polymerization reaction may proceed in the presence of the organoaluminum compound. Specific examples of such organoaluminum compounds may include trialkyl aluminum, dialkyl aluminum halide, alkyl aluminum dihalide, aluminum dialkyl hydride, or alkyl aluminum sesqui halide. More specific examples thereof may include $Al(C_2H_5)_3$, $Al(C_2H_5)_2H$, $Al(C_3H_7)_3$, $Al(C_3H_7)_2H$, $Al(i\text{-}C_4H_9)_2H$, $Al(C_8H_{17})_3$, $Al(C_{12}H_{25})_3$, $Al(C_2H_5)(C_{12}H_{25})_2$, $Al(i\text{-}C_4H_9)(C_{12}H_{25})_2$, $Al(i\text{-}C_4H_9)_2H$, $Al(i\text{-}C_4H_9)_3$, $(C_2H_5)_2AlCl$, $(i\text{-}C_3H_9)_2AlCl$, $(C_2H_5)_3A_{l2}Cl_3$ and the like. These organoaluminum compounds may be continuously added to the reactor and may be added at about 0.1 to 10 mols per 1 kg of reaction medium added to the reactor for adequate moisture removal.

In addition, the polymerization pressure may be about 1 $Kgf/cm^2$ to about 100 $Kgf/cm^2$, preferably about 1 $Kgf/cm^2$ to about 50 $Kgf/cm^2$, and more preferably about 5 $Kgf/cm^2$ to about 30 $Kgf/cm^2$.

In addition, when the transition metal compound is used in a state supported on a support, the transition metal compound may be dissolved or diluted in an aliphatic hydrocarbon solvent having 5 to 12 carbon atoms such as pentane, hexane, heptane, nonane, decane, and an isomer thereof, an aromatic hydrocarbon solvent such as toluene, and benzene, or a hydrocarbon solvent substituted with chlorine such as dichloromethane, and chlorobenzene, and then added. The solvent used herein is preferably used after removing a small amount of water or air, which acts as a catalyst poison, by treating with a small amount of alkyl aluminum. It is also possible to further use the cocatalyst.

The first ethylene-alpha olefin copolymer (a) may be prepared by copolymerizing ethylene and an alpha-olefin using the metallocene catalyst described above.

By the above preparation method, the first ethylene-alpha olefin copolymer (a) having the above physical properties can be prepared.

## Second ethylene-alpha olefin copolymer (b)

In the polyethylene composition of the present disclosure, the second ethylene-alpha olefin copolymer (b), which has excellent mechanical properties, is blended with the above-described first ethylene-alpha olefin copolymer (a), thereby adjusting the balance between mechanical properties and elongation. Accordingly, it may impart characteristics suitable for manufacturing a biaxially stretched film having high shrinkage resistance, printability, and transparency while maintaining mechanical properties, productivity, and stretching stability equal to or superior to those of the conventional ones.

Specifically, the second ethylene-alpha olefin copolymer (b) has a density of 0.930 $g/cm^3$ to 0.960 $g/cm^3$ and a melt index ($MI_{2.16}$, 190 °C, 2.16 kg load) of 0.2 g/10min to 2.0 g/10 min.

Preferably, the second ethylene-alpha olefin copolymer (b) may have a density of 0.935 $g/cm^3$ or more, 0.938 $g/cm^3$ or more, or 0.940 $g/cm^3$ or more, and 0.955 $g/cm^3$ or less, 0.950 $g/cm^3$ or less, or 0.945 $g/cm^3$ or less.

In addition, the second ethylene-alpha olefin copolymer (b) may have a melt index ($MI_{2.16}$, 190 °C, 2.16 kg load) of 0.2 g/10min or more, 0.3 g/10min or more, or 0.4 g/10min or more, and 1.8 g/10min or less, 1.5 g/10min or less, or 1.2 g/10min or less.

The second ethylene-alpha olefin copolymer (b) may have a number average molecular weight (Mn) of 20000 g/mol or more, or 20000 g/mol or more and 35000 g/mol or less, a weight average molecular weight (Mw) of 95000 g/mol or more and 150000 g/mol or less, and a molecular weight distribution (Mw/Mn) of 3.5 or more and 4.8 or less.

Preferably, the number average molecular weight (Mn) of the second ethylene-alpha olefin copolymer (b) may be

22000 g/mol or more, 23000 g/mol or more, or 25000 g/mol or more, and 33000 g/mol or less, 32000 g/mol or less, or 30000 g/mol or less.

The weight average molecular weight (Mw) of the second ethylene-alpha olefin copolymer (b) may be 100000 g/mol or more, 105000 g/mol or more, or 110000 g/mol or more, and 140000 g/mol or less, 130000 g/mol or less, or 120000 g/mol or less.

In addition, the molecular weight distribution (Mw/Mn) of the second ethylene-alpha olefin copolymer (b) may be 3.6 or more, or 3.7 or more, or 3.9 or more, or 4.0 or more, and 4.7 or less, or 4.5 or less, or 4.3 or less, or 4.2 or less.

The second ethylene-alpha olefin copolymer (b) may have at least one of the above-described physical properties, and may have all of the above-described physical properties to exhibit excellent mechanical strength.

Here, the method for measuring each physical property of the second ethylene-alpha olefin copolymer (b) is the same as previously described for the polyethylene composition, and therefore, a detailed explanation is omitted.

The second ethylene-alpha olefin copolymer (b) may include at least one alpha-olefin selected from the group consisting of 1-butene, 1-pentene, 1-hexene, 4-methyl-1-pentene, 1-octene, 1-decene, 1-dodecene, 1-tetradecene, 1-hexadecene, 1-octadecene, 1-eicosene, and a mixture thereof together with ethylene.

Preferably, the second ethylene-alpha olefin copolymer (b) may comprise an ethylene/1-hexene copolymer.

When the second ethylene-alpha olefin copolymer (b) is the above-described copolymer, the above-described physical properties can be more easily achieved. However, the type of the second ethylene-alpha olefin copolymer (b) is not limited thereto, and various types known in the art may be used as long as they can exhibit the above-mentioned physical properties.

Meanwhile, the second ethylene-alpha olefin copolymer (b) may be prepared in the presence of a metallocene catalyst.

Specifically, the second ethylene-alpha olefin copolymer (b) may be prepared by copolymerizing ethylene and a comonomer while introducing hydrogen gas in the presence of a catalyst composition including a first metallocene compound represented by the following Chemical Formula 6 and a second metallocene compound represented by the following Chemical Formula 7 in a molar ratio of 1:1 to 1:8:

[Chemical Formula 6] $(Cp^1 R^a)_m(Cp^2R^b)M^2Z^2_{3-m}$

in Chemical Formula 6,

- $M^2$ is a Group 4 transition metal;
- $Cp^1$ and $Cp^2$ are each independently cyclopentadienyl unsubstituted or substituted with a $C_{1-20}$ hydrocarbon;
- $R^a$ and $R^b$ are the same as or different from each other, and are each independently hydrogen, $C_{1-20}$ alkyl, $C_{1-20}$ alkoxy, $C_{2-20}$ alkoxyalkyl, $C_{6-20}$ aryl, $C_{6-20}$ aryloxy, $C_{2-20}$ alkenyl, $C_{7-40}$ alkylaryl, $C_{7-40}$ arylalkyl, $C_{8-40}$ arylalkenyl, $C_{2-20}$ alkynyl, or a substituted or unsubstituted $C_{2-20}$ heteroaryl containing at least one heteroatom selected from the group consisting of N, O and S, provided that at least one of $R^a$ and $R^b$ is not hydrogen;
- each $Z^2$ is independently halogen, $C_{1-20}$ alkyl, $C_{2-20}$ alkenyl, $C_{7-40}$ alkylaryl, $C_{7-40}$ arylalkyl, $C_{6-20}$ aryl, substituted or unsubstituted $C_{1-20}$ alkylidene, a substituted or unsubstituted amino group, $C_{2-20}$ alkoxyalkyl, or $C_{7-40}$ arylalkoxy; and
- m is 1 or 0;

[Chemical Formula 7]

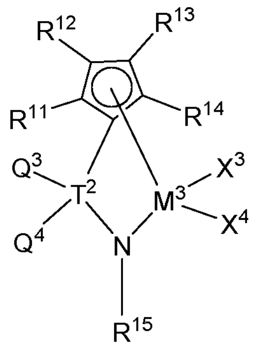

in Chemical Formula 7,

$M^3$ is a Group 4 transition metal,
$T^2$ is carbon, silicon or germanium,
$X^3$ and $X^4$ are the same as or different from each other, and are each independently halogen or $C_{1-20}$ alkyl,
$R^{11}$ to $R^{14}$ are the same as or different from each other, and are each independently hydrogen, $C_{1-20}$ alkyl, $C_{2-20}$ alkenyl, $C_{6-20}$ aryl, $C_{7-20}$ alkylaryl, $C_{7-20}$ arylalkyl, or two or more of $R^{11}$ to $R^{14}$ adjacent to each other are connected to each other to form a substituted or unsubstituted aliphatic ring, a substituted or unsubstituted aromatic ring, or a substituted or unsubstituted heteroaromatic ring containing at least one selected from the group consisting of N, O and S,
$Q^3$ and $Q^4$ are the same as or different from each other, and are each independently $C_{1-20}$ alkyl, $C_{2-20}$ alkenyl, $C_{6-30}$ aryl, or $C_{2-20}$ alkoxyalkyl, and
$R^{15}$ is $C_{1-20}$ alkyl, $C_{2-20}$ alkenyl, or $C_{6-30}$ aryl.

Unless otherwise specified herein, following terms may be defined as follows.

The halogen may be fluorine (F), chlorine (Cl), bromine (Br) or iodine (I).

The $C_{1-20}$ alkyl group may be a linear, branched or cyclic alkyl group. Specifically, the $C_{1-20}$ alkyl group may be a $C_{1-15}$ linear alkyl group; a $C_{1-10}$ linear alkyl group; a $C_{1-5}$ linear alkyl group; a $C_{3-20}$ branched or cyclic alkyl group; a $C_{3-15}$ branched or cyclic alkyl group; or a $C_{3-10}$ branched or cyclic alkyl group. More specifically, the $C_{1-20}$ alkyl group may be a methyl group, an ethyl group, an n-propyl group, an iso-propyl group, an n-butyl group, an iso-butyl group, a tert-butyl group, an n-pentyl group, an iso-pentyl group, a neo-pentyl group, a cyclohexyl group or the like.

The $C_{2-20}$ alkenyl group may be a linear, branched, or cyclic alkenyl group. Specifically, the $C_{2-20}$ alkenyl group may be a $C_{2-20}$ linear alkenyl group, a $C_{2-10}$ linear alkenyl group, a $C_{2-5}$ linear alkenyl group, a $C_{3-20}$ branched alkenyl group, a $C_{3-15}$ branched alkenyl group, a $C_{3-10}$ branched alkenyl group, a $C_{5-20}$ cyclic alkenyl group, or a $C_{5-10}$ cyclic alkenyl group. More specifically, the $C_{2-20}$ alkenyl group may be an ethenyl group, a propenyl group, a butenyl group, a pentenyl group, a cyclohexenyl group, or the like.

The $C_{6-20}$ aryl may be a monocyclic, bicyclic or tricyclic aromatic hydrocarbon, and includes monocyclic or condensed aryl. Specifically, the $C_{6-20}$ aryl may be phenyl, biphenyl, naphthyl, anthracenyl, phenanthrenyl, fluorenyl, or the like.

The $C_{7-40}$ alkylaryl may be a substituent in which at least one hydrogen of the aryl is substituted with alkyl. Specifically, the $C_{7-40}$ alkylaryl may be methylphenyl, ethylphenyl, n-propylphenyl, iso-propylphenyl, n-butylphenyl, iso-butylphenyl, tert-butylphenyl, cyclohexylphenyl, or the like.

The $C_{7-40}$ arylalkyl may include a substituent in which at least one hydrogen of the alkyl is substituted with aryl. Specifically, the $C_{7-40}$ arylalkyl may be benzyl, phenylpropyl, phenylhexyl, or the like.

The $C_{6-20}$ aryloxy may be phenoxy, biphenoxy, naphthoxy, or the like, but the present disclosure is not limited thereto.

The $C_{1-20}$ alkoxy group may be a methoxy group, an ethoxy group, a phenyloxy group, a cyclohexyloxy group, or the like, but the present disclosure is not limited thereto.

The $C_{2-20}$ alkoxyalkyl group is a functional group in which at least one hydrogen of the alkyl group is substituted with an alkoxy group, and specifically, it may be an alkoxyalkyl group such as a methoxymethyl group, a methoxyethyl group, an ethoxymethyl group, an iso-propoxymethyl group, an iso-propoxyethyl group, an iso-propoxyhexyl group, a tert-butoxymethyl group, a tert-butoxyethyl group, a tert-butoxyhexyl group, or the like, but the present disclosure is not limited thereto.

The $C_{1-20}$ alkylsilyl group or the $C_{1-20}$ alkoxysilyl group is a functional group in which 1 to 3 hydrogens of $-SiH_3$ are substituted with 1 to 3 alkyl groups or alkoxy groups described above, and specifically, it may be an alkylsilyl group such as a methylsilyl group, a dimethylsilyl group, a trimethylsilyl group, a dimethylethylsilyl group, a diethylmethylsilyl group or a

dimethylpropylsilyl group; an alkoxysilyl group such as a methoxysilyl group, a dimethoxysilyl group, a trimethoxysilyl group or a dimethoxyethoxysilyl group; or an alkoxyalkylsilyl group such as a methoxydimethylsilyl group, a diethoxymethylsilyl group or a dimethoxypropylsilyl group, but the present disclosure is not limited thereto.

The $C_{1-20}$ silylalkyl group is a functional group in which at least one hydrogen of the alkyl group is substituted with a silyl group, and specifically, it may be $-CH_2-SiH_3$, a methylsilylmethyl group or a dimethylethoxysilylpropyl group, or the like, but the present disclosure is not limited thereto.

The sulfonate group has a structure of $-O-SO_2-R'$, wherein R' may be a $C_{1-20}$ alkyl group. Specifically, the $C_{1-20}$ sulfonate group may be a methanesulfonate group, a phenylsulfonate group, or the like, but the present disclosure is not limited thereto.

The heteroaryl is a $C_{2-20}$ heteroaryl containing at least one of N, O, and S as a heterogeneous element, and includes monocyclic or condensed heteroaryl. Specifically, it may be xanthene, thioxanthen, a thiophene group, a furan group, a pyrrole group, an imidazole group, a thiazole group, an oxazole group, an oxadiazole group, a triazole group, a pyridyl group, a bipyridyl group, a pyrimidyl group, a triazine group, an acridyl group, a pyridazine group, a pyrazinyl group, a quinolinyl group, a quinazoline group, a quinoxalinyl group, a phthalazinyl group, a pyrido-pyrimidinyl group, a pyrido-pyrazinyl group, a pyrazino-pyrazinyl group, an isoquinoline group, an indole group, a carbazole group, a benzoxazole group, a benzoimidazole group, a benzothiazole group, a benzocarbazole group, a benzothiophene group, a dibenzothiophene group, a benzofuranyl group, a phenanthroline group, an isoxazolyl group, a thiadiazolyl group, a phenothiazinyl group, a dibenzofuranyl group, or the like, but the present disclosure is not limited thereto.

In addition, the Group 4 transition metal may be titanium (Ti), zirconium (Zr), hafnium (Hf), or rutherpodium (Rf), and specifically titanium (Ti), zirconium (Zr), or hafnium (Hf). More specifically, it may be zirconium (Zr) or hafnium (Hf), but is not limited thereto.

In addition, the group 13 element may be boron (B), aluminum (Al), gallium (Ga), indium (In), or thallium (Tl), and specifically, boron (B), or aluminum (Al). However, it is not limited thereto.

The above-mentioned substituents may be optionally substituted with one or more substituents selected from the group consisting of a hydroxyl group; halogen; an alkyl or alkenyl, aryl, alkoxy group; an alkyl or alkenyl, aryl, alkoxy group containing at least one heteroatom of Group 14 to 16 heteroatoms; a silyl group; an alkylsilyl or alkoxysilyl group; a phosphine group; a phosphide group; a sulfonate group; and a sulfone group within the range of exhibiting the same or similar effects as the desired effects.

In addition, "two neighboring substituents are connected with each other to form an aliphatic or aromatic ring" means that the atom(s) of two substituents and the atom(s) to which the two substituents are bonded are connected with each other to form a ring. Specifically, examples in which $R_9$ and $R_{10}$ of $-NR_9R_{10}$ are connected with each other to form an aliphatic ring include a piperidinyl group, and examples in which $R_9$ and $R_{10}$ of $-NR_9R_{10}$ are connected with each other to form an aromatic ring include a pyrrolyl group.

In the catalyst composition, the first metallocene compound represented by the Chemical Formula 6 is a non-crosslinked compound including ligands of $Cp^1$ and $Cp^2$, and is advantageous for mainly producing a low molecular weight copolymer having a low SCB (short chain branch) content.

Specifically, in the Chemical Formula 6, the ligands of $Cp^1$ and $Cp^2$ may be the same or different from each other, and each may be cyclopentadienyl and substituted with one or more, or one to three $C_{1-10}$ alkyls. As the ligands of $Cp^1$ and $Cp^2$ have a pair of non-covalent electrons capable of acting as a Lewis base, high polymerization activity may be achieved. Particularly, as the ligands of $Cp^1$ and $Cp^2$ are cyclopentadienyl with relatively little steric hindrance, they exhibit high polymerization activity and low hydrogen reactivity, and thus polyethylene having a low molecular weight can be polymerized with high activity.

In addition, the ligands of $Cp^1$ and $Cp^2$ can easily control properties such as chemical structure, molecular weight, molecular weight distribution, mechanical properties, and transparency of the polyethylene to be prepared by adjusting the degree of steric hindrance effect depending on the type of the substituted functional groups. Specifically, the ligands of $Cp^1$ and $Cp^2$ are substituted with $R^a$ and $R^b$, respectively, wherein $R^a$ and $R^b$ are the same as or different from each other, and each may independently be hydrogen, $C_{1-20}$ alkyl, $C_{2-20}$ alkoxyalkyl, $C_{7-40}$ arylalkyl, or substituted or unsubstituted $C_{2-12}$ heteroaryl containing at least one heteroatom selected from the group consisting of N, O and S, and more specifically $C_{1-10}$ alkyl, $C_{2-10}$ alkoxyalkyl, $C_{7-20}$ arylalkyl, or substituted or unsubstituted $C_{4-12}$ heteroaryl containing at least one heteroatom selected from the group consisting of N, O and S.

Further, $M^2Z^2_{3-m}$ presents between the ligands of $Cp^1$ and $Cp^2$, and $M^2Z^2_{3-m}$ may affect storage stability of metal complex. In order to effectively ensure this effect, $Z^1$ may each independently be halogen or $C_{1-20}$ alkyl, and more specifically F, Cl, Br or I. In addition, $M^2$ may each independently be Ti, Zr or Hf; Zr or Hf; or Zr.

The first metallocene compound may be a compound in which each of $Cp^1$ and $Cp^2$ is an unsubstituted or substituted cyclopentadienyl group, and $R^a$ and $R^b$ are each independently hydrogen, $C_{1-10}$ alkyl, $C_{2-10}$ alkoxyalkyl, or $C_{7-20}$ arylalkyl, wherein at least one of $R^a$ and $R^b$ is an alkoxyalkyl group such as t-butoxyhexyl group, more specifically, a substituent of $-(CH_2)_p-OR^c$ (wherein $R^c$ is a linear or branched alkyl group having 1 to 6 carbon atoms, and p is an integer of 2 to 4). In addition, this case shows a low conversion to the comonomer compared to other Cp-based catalysts not

including the above substituent in the preparation of polyethylene using a comonomer, so that a low molecular weight polyethylene in which the degree of copolymerization or comonomer distribution is controlled can be prepared. In addition, when the first metallocene compound having the above structure is supported on a support, the $-(CH_2)_p-OR^c$ group among the substituents can form a covalent bond through close interaction with the silanol group on the surface of the silica used as the support. Therefore, stable supported polymerization is possible.

The first metallocene compound represented by the Chemical Formula 6 may be a compound represented by one of the following structural formulae, but is not limited thereto:

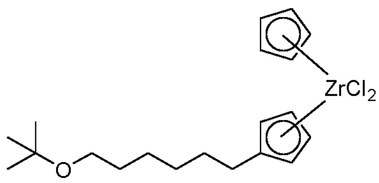
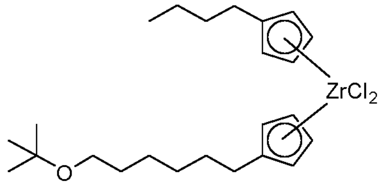
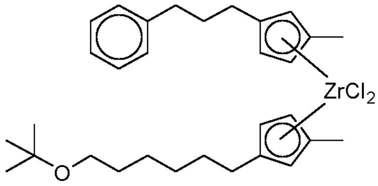
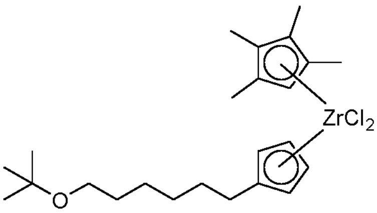
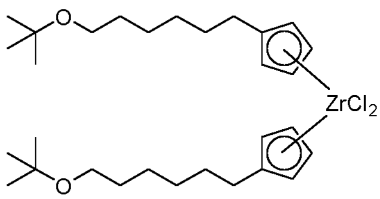
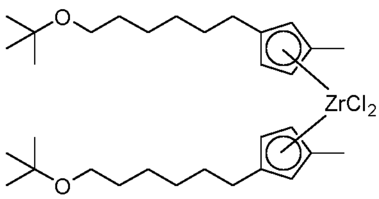
.

The first metallocene compound represented by the Chemical Formula 6 may be synthesized by applying known reactions, and a more detailed synthesis method may be understood with reference to Examples.

Meanwhile, in one embodiment of the present disclosure, the second metallocene compound represented by the Chemical Formula 7 includes an aromatic ring compound containing cyclopentadienyl or a derivative thereof and a nitrogen atom, and has a structure in which the aromatic ring compound and the nitrogen atom are cross-linked by $T^2Q^3Q^4$, which is a bridge group. The second metallocene compound having such a specific structure is applied to the polymerization reaction of the ethylene/1-hexene copolymer to exhibit high activity and copolymerizability, and can provide an olefin copolymer having a high molecular weight.

In particular, the second metallocene compound represented by the Chemical Formula 7 has a well-known structure of CGC (constrained geometry catalyst), so that comonomer incorporation is excellent, and the distribution of the comonomer is controlled by the electronic and steric characteristics of the ligand. These properties control ASL (average ethylene sequence length) to increase the middle and high molecular weight regions in the molecular weight distribution, thereby increasing the tie molecule fraction and the entanglement of polymer chains. Accordingly, it is easy to prepare a polyethylene resin exhibiting long-term stability and processability together with excellent mechanical properties.

$M^3$ of the metallocene compound represented by the Chemical Formula 7 may be a Group 4 transition metal, and may preferably be titanium (Ti), zirconium (Zr), or hafnium (Hf).

Preferably, $T^2$ in Chemical Formula 7 may be silicon.

Preferably, $X^3$ and $X^4$ in Chemical Formula 7 may each independently be methyl or chlorine (Cl).

Preferably, $R^{11}$ to $R^{14}$ in Chemical Formula 7 are the same as or different from each other, and each may independently be methyl or phenyl.

Preferably, two or more of $R^{11}$ to $R^{14}$ adjacent to each other in the Chemical Formula 7 are connected with each other to form a substituted or unsubstituted aliphatic ring, a substituted or unsubstituted aromatic ring, or a substituted or unsubstituted heteroaromatic ring containing at least one selected from the group consisting of N, O and S. For example, in Chemical Formula 7, as two or more of $R^{11}$ to $R^{14}$ adjacent to each other are connected to form an aliphatic, aromatic, or heteroaromatic ring, an indenyl group, a fluorenyl group, a benzothiophene group, or a dibenzothiophene group in which cyclopentadiene is fused may be formed. In addition, the indenyl group, fluorenyl group, benzothiophene group, and dibenzothiophene group may be substituted with one or more substituents.

Preferably, $R^{15}$ to $R^{16}$ in Chemical Formula 7 may be the same as or different from each other, and may each independently be methyl, ethyl, phenyl, propyl, hexyl, or tert-butoxyhexyl.

Preferably, $R^{17}$ in Chemical Formula 7 may be methyl, ethyl, n-propyl, iso-propyl, n-butyl, or tert-butyl.

As the second metallocene compound capable of providing a polyethylene resin excellent in both long-term stability and processability as well as excellent mechanical properties due to the increased middle and high molecular weight regions, the metallocene compound of the Chemical Formula 7 may be any one selected from the group consisting of the following compounds, but the present disclosure is not limited thereto:

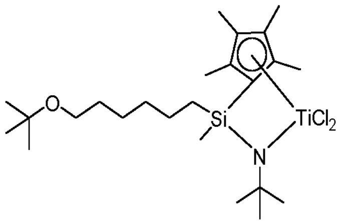
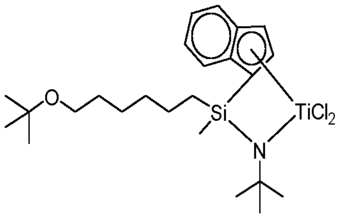
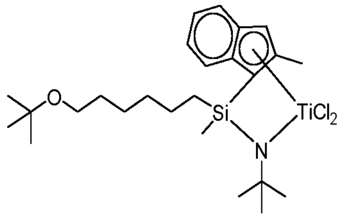

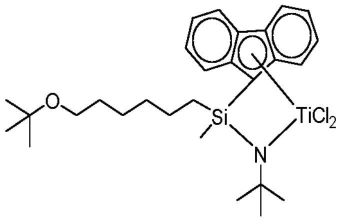
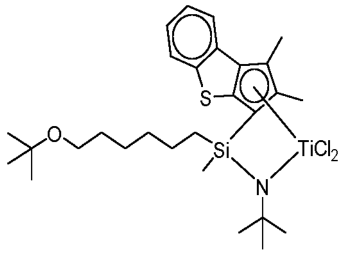

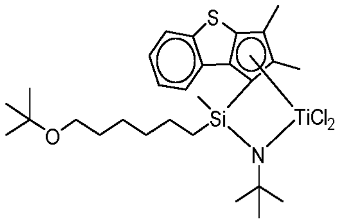
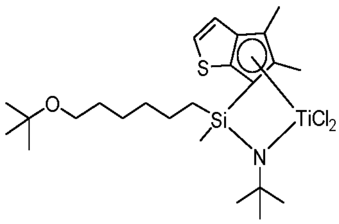
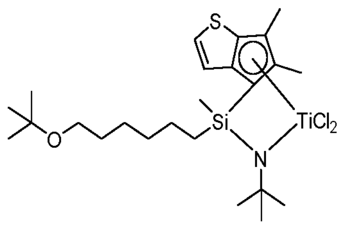
.

The second metallocene compound represented by the Chemical Formula 7 may be synthesized by applying known reactions. Specifically, it may be prepared by connecting a nitrogen compound and a cyclopentadiene derivative with a bridge compound to prepare a ligand compound, and then adding a metal precursor compound to perform metalation. However, the method is not limited thereto, and a more detailed synthesis method may be understood with reference to Examples.

The second metallocene compound of Chemical Formula 7 has excellent activity and can polymerize a high molecular weight polyethylene resin. In particular, even when used by being supported on a support, it exhibits high polymerization activity, so that a polyethylene resin having an ultra-high molecular weight can be prepared.

In addition, even when a polymerization reaction is performed with hydrogen to prepare a polyethylene resin having a high molecular weight along with a wide molecular weight distribution, the second metallocene compound of Chemical Formula 7 according to the present disclosure exhibits low hydrogen reactivity, so that it is possible to copolymerize a polyethylene resin having an ultra-high molecular weight with high activity. Therefore, even when used in combination with a catalyst having other characteristics, a polyethylene resin satisfying the characteristics of high molecular weight can be prepared without deterioration in activity, and thus a polyethylene resin having a wide molecular weight distribution while including a high molecular weight polyethylene resin can be easily prepared.

As described above, in the catalyst composition, the first metallocene compound represented by the Chemical Formula 6 may mainly contribute to making a low molecular weight copolymer having a low SCB content, and the second metallocene compound represented by the Chemical Formula 7 may mainly contribute to making a high molecular weight copolymer having a high SCB content. More specifically, the catalyst composition exhibits high comonomer incorporation with respect to the comonomer in the high molecular weight region of the copolymer by the second metallocene compound, and low comonomer incorporation with respect to the comonomer in the low molecular weight region of the copolymer by the first metallocene compound. As a result, a polyethylene resin exhibiting excellent heat resistance by having a bimodal molecular weight distribution with excellent mechanical properties can be prepared.

Particularly, controlling the content ratio of the first and second metallocene compounds in the catalyst composition may enable the above-described physical properties and further enhance the improvement effect. Specifically, when including the second metallocene compound in a higher content than the first metallocene compound in the catalyst composition, the middle and high molecular weight regions in the molecule are increased to increase the tie molecule fraction and the entanglement of polymer chains, thereby optimizing the ratio of the high molecular weight region and the low molecular weight region.

Specifically, the first and second metallocene compounds should be included in a molar ratio of 1:2 to 1:8. Preferably, the first and second metallocene compounds may be included in a molar ratio of 1:3 to 1:7, 1:4 to 1:6, or 1:4.5 to

1:5.5. When the first and second metallocene compounds are included within the above range, the balance between mechanical properties and elongation of the polyethylene resin thus prepared is controlled. Accordingly, it maintains mechanical properties, productivity, and stretching stability equal to or superior to those of the conventional ones, and may improve high shrinkage resistance, printability, and transparency.

Meanwhile, the first and second metallocene compounds have the above-described structural characteristics, so they may be stably supported on a support.

In this case, the first and second metallocene compounds are used in a state supported on the support. When used as a supported catalyst, the polymer to be prepared has excellent particle shape and bulk density, and the catalyst can be suitably used in conventional slurry polymerization, bulk polymerization, and gas phase polymerization.

The support may be silica, alumina, magnesia, silica-alumina, or silica-magnesia, and it may usually contain oxides, carbonates, sulfates, or nitrates such as $Na_2O$, $K_2CO_3$, $BaSO_4$, $Mg(NO_3)_2$ and the like. Among the above-mentioned supports, the silica support has little catalyst released from the surface of the support in the polymerization process, because the transition metal compound is supported by chemical bonding with a reactive functional group such as a siloxane group present on the surface of the silica support. As a result, when the polymer is prepared by slurry polymerization or gas phase polymerization, a fouling phenomenon, sticking to the wall surface of the reactor or with each other, may be minimized.

In addition, the support may be surface-modified by a calcination or drying process in order to increase supporting efficiency and minimize leaching and fouling. Through the surface modification step as described above, moisture on the surface of the support that inhibits the reaction with the supported component may be removed, and the content of reactive functional groups capable of chemical bonding with the supported components, for example, a hydroxyl group and a siloxane group, may be increased.

Specifically, the calcination or drying process of the support may be performed in a range from a temperature at which moisture disappears from the surface of the support to a temperature at which reactive functional groups, particularly hydroxyl groups (OH groups) present on the surface, are completely eliminated. Specifically, the temperature may be 150 to 600 °C, or 200 to 500 °C. When the temperature is low, less than 150 °C, the moisture removal efficiency is low, and as a result, the moisture remaining on the support may react with the cocatalyst to lower the supporting efficiency. When the temperature is excessively high, higher than 600 °C, pores on the surface of the support may be combined with each other to reduce specific surface area, and many reactive functional groups such as hydroxyl groups or silanol groups may be lost from the surface, leaving only siloxane groups. Thus, reactive sites with cocatalyst may be reduced, which is not preferable.

When the first and second metallocene compounds are supported on a support and the support is silica, the first and second metallocene compounds may be supported in a total amount of 40 μmol or more, or 80 μmol or more, and 240 μmol or less, or 160 μmol or less based on 1 g of silica. When supported within the above range, it may exhibit an appropriate supporting activity, which may be advantageous in terms of maintaining the activity of the catalyst and economic feasibility.

**In** addition, the catalyst composition may further include a cocatalyst in terms of improving high activity and process stability.

**In** the hybrid supported metallocene catalyst of the present disclosure, the type and content of the cocatalyst additionally included are as described above, and specific details are omitted.

For example, among the compounds described above, the cocatalyst may be, more specifically, an alkylaluminoxane-based cocatalyst such as methylaluminoxane.

Further, the alkylaluminoxane-based cocatalyst stabilizes the metallocene compounds and acts as a Lewis acid, so that further enhances catalytic activity by including a metal element capable of forming a bond with a functional group introduced into a bridge group of the second metallocene compound through Lewis acid-base interaction.

**In** addition, the amount of the cocatalyst used may be appropriately adjusted depending on desired properties or effects of the catalyst and the resin composition. For example, when silica is used as the support, the cocatalyst may be supported in an amount of 8 mmol or more, or 10 mmol or more, and 25 mmol or less, or 20 mmol or less based on a weight of the support, for example, 1 g of silica.

In addition, the catalyst composition described above may be used by itself for polymerization, or may be used in a prepolymerized state by contacting with propylene monomers before the use in a polymerization reaction. In this case, the preparation method according to an embodiment of the present disclosure may further include a prepolymerization step of contacting the catalyst composition with ethylene monomers before preparing the polyethylene by a polymerization reaction.

In addition, the catalyst composition may be dissolved or diluted in an aliphatic hydrocarbon solvent having 5 to 12 carbon atoms such as pentane, hexane, heptane, nonane, decane, and an isomer thereof, an aromatic hydrocarbon solvent such as toluene, and benzene, or a hydrocarbon solvent substituted with chlorine such as dichloromethane, and chlorobenzene, and then injected. The solvent used herein is preferably used after removing a small amount of water or air, which acts as a catalyst poison, by treating with a small amount of alkyl aluminum. It is also possible to further use the

cocatalyst.

Meanwhile, the polymerization process may be performed by contacting ethylene and a comonomer in the presence of the above-described catalyst composition. In particular, the polymerization reaction may be performed in a bi-modal type using two or more reactors or in a single polymerization reactor.

The polymerization may be performed at a temperature of 25 °C to 500 °C, preferably 25 °C to 200 °C, and more preferably 50 °C to 150 °C. In addition, the polymerization may be performed at a pressure of 1 $kgf/cm^2$ to 100 $kgf/cm^2$, preferably 1 $kgf/cm^2$ to 50 $kgf/cm^2$, and more preferably 5 $kgf/cm^2$ to 30 $kgf/cm^2$.

**In** addition, in the copolymerization process, the input of 1-hexene as a comonomer may be about 4.0 wt% to about 6.0 wt% based on the total input weight of ethylene. More specifically, the 1-hexene input may be about 4.1 wt% or more, about 4.2 wt% or more, about 4.3 wt% or more, about 4.4 wt% or more, or about 4.5 wt% or more, and about 5.9 wt% or less, about 5.8 wt% or less, 5.6 wt% or less, about 5.4 wt% or less, about 5.2 wt% or less, or about 5.0 wt% or less.

Meanwhile, the polyethylene resin according to the present disclosure may be prepared by copolymerizing ethylene and a comonomer in the presence of the above-described catalyst composition while introducing hydrogen gas.

For example, the hydrogen gas may be introduced in an amount of 35 ppm to 250 ppm, 40 ppm to 200 ppm, 50 ppm to 190 ppm, 55 ppm to 180 ppm, 58 ppm to 170 ppm, or 60 ppm to 145 ppm based on the weight of ethylene.

**In** the step of supporting the catalyst precursor on the cocatalyst-supported support, the supported catalyst may be prepared by adding the first and second transition metal compounds to the cocatalyst-supported support, stirring, and then further adding a cocatalyst.

In the hybrid supported metallocene catalyst according to the embodiment, the amount of the support, cocatalyst, cocatalyst-supported support and transition metal compound used may be appropriately adjusted depending on desired properties or effects of the supported catalyst.

Meanwhile, when the molar ratio of the first transition metal compound and the second transition metal compound (first transition metal compound: second transition metal compound) is less than 1:0.3, it is difficult to produce ultra-low-density polyethylene as comonomer incorporation decreases. When the ratio exceeds 1:5.5, it is difficult to reproduce the molecular structure of the desired polymer.

At this time, a supported amount of the metallocene compound supported on a silica support may be 0.01 to 1 mmol/g based on 1 g of the support. That is, it is preferable to control the amount within the above-described range in consideration of the effect that the metallocene compound contributes to the catalyst.

When preparing the hybrid supported catalyst, a reaction solvent may be a hydrocarbon solvent such as pentane, hexane, and heptane; or an aromatic solvent such as benzene and toluene.

For details on the preparation method of the supported catalyst, refer to Examples to be described later. However, the preparation method of the supported catalyst is not limited to this description. The preparation method may further include a step which is usually carried out in the technical field of the present invention, and the step(s) of the preparation method may be changed by the step(s) usually changeable.

Meanwhile, the above-described polyethylene copolymer may be prepared by a method including the step of copolymerizing ethylene and an alpha-olefin in the presence of the above-described hybrid supported metallocene catalyst.

The above-described hybrid supported catalyst can exhibit excellent supporting performance, catalytic activity, and high comonomer incorporation, and can prepare a polyethylene copolymer capable of producing a biaxially stretched film having excellent expandable processing area and mechanical properties.

The preparation of the second ethylene-alpha olefin copolymer (b) may be carried out by a slurry polymerization method using ethylene and an alpha-olefin as raw materials in the presence of the above-described hybrid supported catalyst with a conventional equipment and contact technology.

The preparation method of the second ethylene-alpha olefin copolymer (b) may copolymerize ethylene and an alpha-olefin using a continuous slurry polymerization reactor, a loop slurry reactor, or the like, but the present disclosure is not limited thereto.

That is, in the case of the hybrid supported metallocene catalyst of the present disclosure in which the first metallocene compound and the second metallocene compound are supported within the above molar ratio, both processability and shrinkage can be further improved along with mechanical properties of the polyethylene copolymer due to the interaction of two or more catalysts.

In the hybrid supported metallocene catalyst of the present disclosure, the support for supporting the first metallocene compound and the second metallocene compound, the additionally included cocatalyst, and the polymerization process are as described above with respect to the first ethylene-alpha olefin copolymer (a), and the specific details are omitted.

The second ethylene-alpha olefin copolymer (b) according to the present disclosure can be prepared by copolymerizing ethylene and alpha-olefin using the above-described supported metallocene catalyst.

By the above preparation method, the second ethylene-alpha olefin copolymer (b) having the above physical properties can be prepared.

## Biaxially stretched film

The polyethylene composition having the above physical properties can stably form a biaxially stretched film having high shrinkage resistance, printability and transparency while maintaining excellent mechanical properties, productivity and stretching stability.

Meanwhile, the biaxially stretched film may be manufactured by a conventional film manufacturing method except for using the polyethylene composition described above.

For example, in order to manufacture a polyethylene biaxially stretched film according to the present disclosure, a lab extruder line manufactured from Bruckner may be used (L/D ratio: 42, Screw diameter: 25 mm, Melt/T-Die temperature: 220 °C) to prepare a polyethylene composition sheet having a thickness of 0.75 mm. Thereafter, a polyethylene biaxially stretched film may be prepared by biaxially stretching the polyethylene composition sheet with dimensions of 90 mm X 90 mm in length and width using KARO 5.0 equipment. Specific methods and conditions are as described in Test Example 3 to be described later.

In addition, the polyethylene biaxially stretched film according to the present disclosure may further include an additive well known in the art in addition to the above-described polyethylene copolymer. Specifically, such an additive may include a solvent, a heat stabilizer, an antioxidant, a UV absorber, a light stabilizer, a metal deactivator, a filler, a reinforcing agent, a plasticizer, a lubricant, an emulsifier, a pigment, an optical brightener, a flame retardant, an antistatic agent, a foaming agent, and the like. The type of the additive is not particularly limited, and general additives known in the art may be used.

The polyethylene biaxially stretched film according to one embodiment of the present disclosure prepared by the above method may have improved performance with excellent expandable processing area characteristics and mechanical properties.

In particular, the polyethylene biaxially oriented film can be stretched at a machine direction (MD) stretching ratio of 4 times or more, or 5 times or more, and a transverse direction (TD) stretching ratio of 6 times or more, or 8 times or more.

The polyethylene biaxially stretched film may have a tensile strength in the MD direction (MD / Machine Direction, film length direction, longitudinal direction) of 80 MPa or more, or 80 MPa to 150 MPa as measured according to ASTM D 882 standard. The tensile strength in the TD direction (TD / Transverse Direction, film width direction, transverse direction) of the polyethylene biaxially stretched film may be 110 MPa or more, or 110 MPa to 250 MPa as measured according to ASTM D 882 standard.

In addition, the polyethylene biaxially stretched film may have a tensile modulus in the MD direction of 700 MPa or more, or 700 MPa to 1500 MPa, and a tensile modulus in the TD direction of 800 MPa or more, or 800 MPa to 1600 MPa as measured according to ASTM D 882 standard.

The polyethylene biaxially stretched film may have a tensile elongation in the MD direction of 200% to 300%, or 220% to 280%, and a tensile elongation in the TD direction of 70% to 140%, or 85% to 125% as measured according to ASTM D 882 standard.

The polyethylene biaxially stretched film may have a tear strength in the MD direction of 6 N/mm to 14.8 N/mm, and a tensile strength in the TD direction of 2.5 N/mm to 6.8 N/mm as measured according to ASTM 1922 standard.

In addition, the polyethylene biaxially stretched film may have a haze of 3% or less, or between 3% or less and 0% or more 0% or more, as measured according to ASTM 1003 standard. Preferably, the haze of the polyethylene biaxially stretched film may be 2.8% or less, or 2.5% or less, or 2.3% or less, 2.2% or less, 2.0% or less, or 1.9% or less. Considering the practical limitations of the film's physical properties, it can be 0.1% or more, 0.5% or more, 1.0% or more, 1.5% or more, or 1.6% or more.

The polyethylene biaxially stretched film may have a gloss 45° of 80 GU or more, or 80 GU to 100 GU, preferably 85 GU or more, 88 GU or more, 90 GU or more, or 94 GU or more as measured according to ASTM 2457 standard.

Further, the polyethylene biaxially stretched film has excellent stretchability and stretching stability, so it can be stretched at a machine direction (MD) stretching ratio of more than 4 times, or 5 times or more, and a transverse direction (TD) stretching ratio of more than 6 times, or 7 times or more. For example, the polyethylene biaxially stretched film may have a total shrinkage rate in the MD/TD directions, namely, the sum of MD shrinkage and TD shrinkage of the biaxially stretched film measured after contraction at 100 °C for 7 minutes according to ASTM D 1204 of 6.0% or less, or 5.9% or less, or 5.8% or less; or a total shrinkage rate in the MD/TD directions, namely, the sum of MD shrinkage and TD shrinkage of the biaxially stretched film measured after contraction at 120 °C for 7 minutes according to ASTM D 1204 is 22.0% or less, or 21.5% or less, or 21% or less; while satisfying the condition that the biaxially stretched film is stretched at an MD stretching ratio of 4 times or more, and a TD stretching ratio of 6 times or more.

The polyethylene biaxially stretched film may have a tensile strength in the MD direction of 100 MPa or more, 110 MPa or more, or 120 MPa or more, and 150 MPa or less, and a tensile strength in the TD direction of 180 MPa or more, 190 MPa or more, or 200 MPa or more and 250 MPa or less as measured according to ASTM D 882 standard.

Accordingly, the average of MD tensile strength and TD tensile strength measured according to ASTM D 882 of the biaxially stretched film may be 130 MPa or more, preferably 140 MPa or more, 150 MPa or more, or 160 MPa or more

and 200 MPa or less.

In addition, the polyethylene biaxially stretched film may have a tensile modulus in the MD direction of 600 MPa or more, or 645 MPa or more, and 1000 MPa or less, and a tensile modulus in the TD direction of 800 MPa or more, or 900 MPa or more and 1500 MPa or less.

Accordingly, the average of MD tensile modulus and TD tensile modulus measured according to ASTM D 882 of the biaxially stretched film may be 700 MPa or more, preferably 750 MPa or more, 780 MPa or more, or 794.5 MPa or more and 1000 MPa or less.

The polyethylene biaxially stretched film may have a tensile elongation in the MD direction of 150% to 250%, or 160% to 230%, and a tensile elongation in the TD direction of 50% to 100%, or 65% to 90% as measured according to ASTM D 882 standard.

The polyethylene biaxially stretched film may have a tear strength in the MD direction of 6 N/mm to 13.1 N/mm, and a tear strength in the TD direction of 1.6 N/mm to 6.7 N/mm as measured according to ASTM 1922 standard.

In addition, the polyethylene biaxially stretched film may have a puncture strength of 300 N/mm or more as measured according to EN 14477 standard. Preferably, the puncture strength may be 320 N/mm or more, 340 N/mm or more, or 357 N/mm or more, and 400 N/mm or less.

In the present disclosure, the physical properties of the biaxially stretched film may be measured according to the above-described standards, and a specific method is as described in Test Example 3 to be described later.

In the present disclosure, the first ethylene-alpha olefin copolymer, which has excellent flowability to impart stretchability, is blended with the second ethylene-alpha olefin copolymer, which has excellent mechanical properties, thereby adjusting the balance between mechanical properties and elongation. Accordingly, a biaxially oriented film having high shrinkage resistance, printability and transparency can be stably manufactured while maintaining excellent mechanical properties, productivity, and stretching stability.

[ADVANTAGEOUS EFFECTS]

The polyethylene according to the present disclosure has an excellent effect of manufacturing a biaxially stretched film having high shrinkage resistance, printability and transparency while maintaining excellent mechanical properties, productivity and stretching stability.

[DETAILED DESCRIPTION OF THE EMBODIMENTS]

Hereinafter, embodiments of the present invention will be described in more detail in the following examples. However, the following examples are for illustrative purposes only and are not intended to limit the present invention.

**[Examples]**

**<Preparation of metallocene compound>**

**Synthesis Example 1**

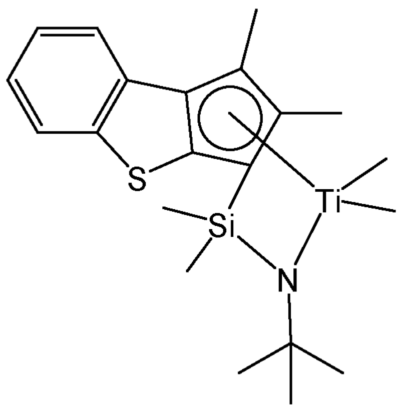

**(1) Preparation of ligand compound**

<Synthesis of N-tert-butyl-1-(1,2-dimethyl-3H-benzo[b]cyclopenta[d]thiophen-3-yl)-1,1-dimethylsilanamine>

4.65 g (15.88 mmol) of the compound of Chemical Formula 1 was added to a 100 mL Schlenk flask, and then 80 mL of THF was added thereto. After adding $tBuNH_2$(4eq, 6.68 mL) at room temperature, the mixture was reacted at room temperature for 3 days. After the reaction, THF was removed, and the mixture was filtered with hexane. After drying the solvent, 4.50 g (yield: 86%) of a yellow liquid was obtained.

$^1$H-NMR (500 MHz, $CDCl_3$): δ 7.99(d, 1H), 7.83(d, 1H), 7.35(dd, 1H), 7.24(dd, 1H), 3.49(s, 1H), 2.37(s, 3H), 2.17(s, 3H), 1.27(s, 9H), 0.19(s, 3H), -0.17(s, 3H).

**(2) Preparation of transition metal compound**

The ligand compound (1.06 g, 3.22 mmol/1.0eq) and MTBE 16.0 mL (0.2 M) were added to a 50 mL schlenk flask and stirred first. At -40 °C, n-BuLi (2.64 mL, 6.60 mmol/2.05eq, 2.5M in THF) was added, and reacted overnight at room temperature. Thereafter, MeMgBr (2.68 mL, 8.05 mmol/2.5eq, 3.0M in diethyl ether) was slowly added dropwise at -40 °C, and then $TiCl_4$(2.68 mL, 3.22 mmol/1.0eq, 1.0M in toluene) was added thereto at room temperature, followed by reacting overnight. The reaction mixture was then filtered through celite using hexane. After drying the solvent, 1.07 g (yield: 82%) of a brown solid was obtained.

$^1$H-NMR (500 MHz, $CDCl_3$): δ 7.99(d, 1H), 7.68(d, 1H), 7.40(dd, 1H), 7.30(dd, 1H), 3.22(s, 1H), 2.67(s, 3H), 2.05(s, 3H), 1.54(s, 9H), 0.58(s, 3H), 0.57(s, 3H), 0.40(s, 3H), - 0.45(s, 3H).

**Synthesis Example 2**

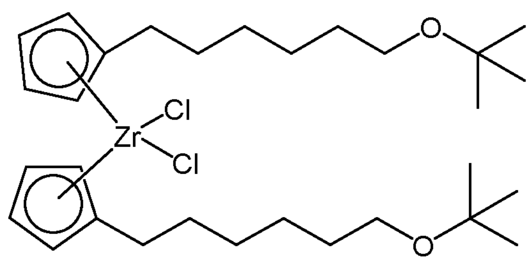

t-butyl-O-$(CH_2)_6$-Cl was prepared by the method shown in Tetrahedron Lett. 2951 (1988) using 6-chlorohexanol, and reacted with $Na(C_5H_5)$ [NaCp] to obtain butyl-O-$(CH_2)_6$-$C_5H_5$ (yield 60%, b.p. 80 °C/0.1 mmHg).

In addition, t-butyl-O-$(CH_2)_6$-$C_5H_5$ was dissolved in tetrahydrofuran (THF) at -78 °C, and n-BuLi was slowly added thereto. Thereafter, it was heated to room temperature and reacted for 8 hours. The lithium salt solution synthesized as described above was slowly added to a suspension solution of $ZrCl_4(THF)_2$ (170 g, 4.50 mmol)/THF(30 mL) at -78 °C, and further reacted for about 6 hours at room temperature. All volatiles were dried under vacuum and the resulting oily liquid material was filtered by adding a hexane solvent. The filtered solution was dried under vacuum, and hexane was added to obtain a precipitate at a low temperature (-20 °C). The obtained precipitate was filtered at a low temperature to obtain [t-butyl-O-$(CH_2)_6$-$C_5H_4]_2ZrCl_2$ compound in the form of a white solid (yield 92%).

$^1$H-NMR (300 MHz, $CDCl_3$): δ 6.28(t, J=2.6 Hz, 2H), 6.19(t, J=2.6 Hz, 2H), 3.31(t, 6.6 Hz, 2H), 2.62(t, J=8 Hz), 1.7 - 1.3(m, 8H), 1.17(s, 9H).

$^{13}$C-NMR ($CDCl_3$): δ 135.09, 116.66, 112.28, 72.42, 61.52, 30.66, 30.31, 30.14, 29.18, 27.58, 26.00.

**Synthesis Example 3**

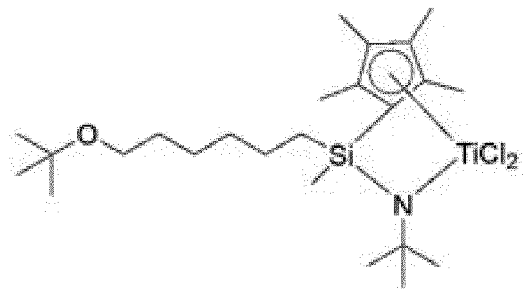

50 g of Mg(s) was added to a 10 L reactor at room temperature, followed by 300 mL of THF. 0.5 g of $I_2$ was added, and the reactor temperature was maintained at 50 °C. After the reactor temperature was stabilized, 250 g of 6-t-butoxyhexyl chloride was added to the reactor at a rate of 5 mL/min using a feeding pump. It was observed that the reactor temperature rose by 4 to 5 °C with the addition of 6-t-butoxyhexylchloride. It was stirred for 12 hours while continuously adding 6-t-butoxyhexylchloride. After reaction for 12 hours, a black reaction solution was obtained. 2 mL of the black solution was taken, and water was added thereto to obtain an organic layer. The organic layer was confirmed to be 6-t-butoxyhexane through $^1$H-NMR. From this, it was confirmed that Grignard reaction was well performed. Thus, 6-t-butoxyhexyl magnesium chloride was synthesized.

500 g of $MeSiCl_3$ and 1 L of THF were added to a reactor, and then the reactor temperature was cooled down to -20 °C. 560 g of the 6-t-butoxyhexyl magnesium chloride synthesized above was added to the reactor at a rate of 5 mL/min using a feeding pump. After completion of the feeding of Grignard reagent, the mixture was stirred for 12 hours while slowly raising the reactor temperature to room temperature. After reaction for 12 hours, it was confirmed that white $MgCl_2$ salt was produced. 4 L of hexane was added thereto and the salt was removed through a labdori to obtain a filtered solution. After the filtered solution was added to the reactor, hexane was removed at 70 °C to obtain a pale yellow liquid. The obtained liquid was confirmed to be methyl(6-t-butoxy hexyl)dichlorosilane through $^1$H-NMR.

$^1$H-NMR(300 MHz, $CDCl_3$): $\delta$ 3.3(t, 2H), 1.5(m, 3H), 1.3(m, 5H), 1.2(s, 9H), 1.1(m, 2H), 0.7(s, 3H).

1.2 mol (150 g) of tetramethylcyclopentadiene and 2.4 L of THF were added to the reactor, and then the reactor temperature was cooled down to -20 °C. 480 mL of n-BuLi was added to the reactor at a rate of 5 ml/min using a feeding pump. After n-BuLi was added, the mixture was stirred for 12 hours while slowly raising the reactor temperature to room temperature. After reaction for 12 hours, an equivalent of methyl(6-t-butoxy hexyl)dichlorosilane (326 g, 350 mL) was rapidly added to the reactor. The mixture was stirred for 12 hours while slowly raising the reactor temperature to room temperature. Then, the reactor temperature was cooled to 0 °C again, and 2 equivalents of t-$BuNH_2$ was added. The mixture was stirred for 12 hours while slowly raising the reactor temperature to room temperature. After reaction for 12 hours, THF was removed. Thereafter, 4 L of hexane was added and the salt was removed through a labdori to obtain a filtered solution. The filtered solution was added to the reactor again, and hexane was removed at 70 °C to obtain a yellow solution. The yellow solution obtained above was confirmed to be methyl(6-t-butoxyhexyl)(tetramethylCpH)t-butylaminosilane through $^1$H-NMR.

$TiCl_3(THF)_3$ (10 mmol) was rapidly added to a dilithium salt of a ligand at -78 °C, which was synthesized from n-BuLi and the ligand of dimethyl(tetramethylCpH)t-butylaminosilane synthesized in THF solution. While slowly heating the reaction solution from -78 °C to room temperature, it was stirred for 12 hours. After stirring for 12 hours, an equivalent of $PbCl_2$ (10 mmol) was added to the reaction solution at room temperature, and then stirred for 12 hours. After stirring for 12 hours, a dark black solution with a blue tinge was obtained. THF was removed from the resulting reaction solution, and then hexane was added to filter the product. Hexane was removed from the filtered solution, and then the product was confirmed to be $(tBu\text{-}O\text{-}(CH_2)_6)(CH_3)Si(C_5(CH_3)_4)(tBu\text{-}N)TiCl_2$, ([methyl(6-t-buthoxyhexyl)silyl($\eta$5-tetramethylCp)(t-Butylamido)] $TiCl_2$), through $^1$H-NMR.

$^1$H-NMR (300 MHz, $CDCl_3$): $\delta$ 3.3(s, 4H), 2.2(s, 6H), 2.1(s, 6H), 1.8 - 0.8(m), 1.4(s, 9H), 1.2(s, 9H), 0.7(s, 3H).

**<Preparation of supported catalyst>**

**Catalyst Preparation Example 1: Preparation of hybrid supported metallocene catalyst**

5.0 kg of a toluene solution was added to a 20 L stainless steel (sus) high-pressure reactor, and the reactor temperature was maintained at 40 °C. 1000 g of silica (manufactured by Grace Davison, SYLOPOL 948) dehydrated by applying vacuum at a temperature of 600 °C for 12 hours was added to the reactor and sufficiently dispersed, and then 80 g of the first metallocene compound of Synthesis Example 2 was dissolved in toluene and added thereto, followed by stirring at 200 rpm at 40 °C for 2 hours to react. Thereafter, stirring was stopped, settling was performed for 30 minutes, and the reaction solution was decanted.

2.5 kg of toluene was added to the reactor, and 9.4 kg of a 10 wt% methylaluminoxane (MAO)/toluene solution

was added thereto, followed by stirring at 200 rpm at 40 °C for 12 hours. After the reaction, stirring was stopped, settling was performed for 30 minutes, and the reaction solution was decanted. After adding 3.0 kg of toluene and stirring for 10 minutes, stirring was stopped and settling was performed for 30 minutes, and the toluene solution was decanted.

3.0 kg of toluene was added to the reactor, and then 314 mL of the 29.2 wt% second metallocene compound of Synthesis Example 3/toluene solution was added to the reactor, followed by stirring at 200 rpm at 40 °C for 2 hours to react. At this time, the molar ratio of the first metallocene compound and the second metallocene compound was 1:5. After the reactor temperature was lowered to room temperature, stirring was stopped, settling was performed for 30 minutes, and the reaction solution was decanted.

After adding 2.0 kg of toluene and stirring for 10 minutes, stirring was stopped and settling was performed for 30 minutes, and the reaction solution was decanted.

3.0 kg of hexane was added to the reactor, the hexane slurry was transferred to a filter dryer, and the hexane solution was filtered. It was dried under reduced pressure at 40 °C for 4 hours to prepare 910g-$SiO_2$ hybrid supported catalyst.

**<Preparation of ethylene-alpha olefin copolymer>**

**Preparation Example 1: Preparation of ethylene/1-octene copolymer (PEa)**

A 1.5 L continuous process reactor was preheated at 120 °C while adding 5 kg/h of a hexane solvent and 0.31 kg/h of 1-octene. Triisobutylaluminum (Tibal, 0.045 mmol/min), the transition metal compound obtained in Synthesis Example 1, and dimethylanilinium tetrakis(pentafluorophenyl)borate cocatalyst (2.6 μmol/min) were simultaneously added to the reactor. Subsequently, ethylene (0.87 kg/h) and hydrogen gas (10 cc/min) were introduced into the reactor and maintained at 160.0 °C for more than 60 minutes in a continuous process at a pressure of 89 bar to carry out a copolymerization reaction to obtain an ethylene/1-octene copolymer (PE-a).

**Preparation Example 2: Preparation of ethylene/1-hexene copolymer (PEb)**

An ethylene/1-hexene copolymer (PE-b) was slurry polymerized in the presence of the supported hybrid catalyst 1 prepared in Catalyst Preparation Example 1.

At this time, the polymerization reactor was an isobutane (i-C4) slurry loop process, a continuous polymerization reactor, and a reactor volume was 140 L with a flow rate of about 7 m/s. Gases (ethylene, hydrogen) required for polymerization and 1-hexene, a comonomer, were constantly and continuously introduced, and the flow rates were adjusted according to target products. At this time, the ethylene input was 31.1 kg/hr, the 1-hexene input was adjusted to 2.5 wt% compared to ethylene, and the hydrogen input was adjusted to 56 ppm compared to ethylene. In addition, the concentrations of all gases and 1-hexene comonomer in Preparation Example 1 were confirmed by on-line gas chromatograph. The supported catalyst was prepared and introduced as an isobutane slurry having a concentration of 4 wt%, the reactor pressure was maintained at about 40 bar, and the polymerization temperature was about 80 °C.

**<Test Example 1: Evaluation of physical properties of polyethylene>**

The physical properties of the ethylene-alpha olefin copolymers prepared in Preparation Examples 1 to 2 were measured by the method described below and are shown in Table 1.

**(1) Melt index**

The melt index ($MI_{2.16}$) was measured under a load of 2.16 kg at 190 °C according to ASTM D 1238 (Condition E, 190 °C, 2.16 kg) of the American Society for Testing and Materials (measurement equipment: MI-4 manufactured by Gottfert), and expressed as the weight (g) of the polymer melted for 10 minutes.

**(2) Density**

The density ($g/cm^3$) was measured using a density gradient column according to ASTM D 1505 (American Society for Testing and Materials).

**(3) Number average molecular weight, weight average molecular weight, and molecular weight distribution**

Regarding the ethylene-alpha olefin copolymers prepared in Preparation Examples 1 to 2, the molecular weight distribution (Mw/Mn, PDI, polydispersity index) was calculated by measuring a weight average molecular weight (Mw,

g/mol) and a number average molecular weight (Mn, g/mol) using gel permeation chromatography (GPC, manufactured by Water) according to ASTM D 6474 (American Society for Testing and Materials), and then dividing the weight average molecular weight by the number average molecular weight.

Specifically, PL-GPC220 manufactured by Waters was used as the gel permeation chromatography (GPC) instrument, and a Polymer Laboratories PLgel MIX-B 300 mm length column was used. An evaluation temperature was 160 °C, and 1,2,4-trichlorobenzene was used for a solvent at a flow rate of 1 mL/min. Each ethylene-alpha olefin copolymer sample prepared in Preparation Examples 1 and 2 was pretreated by dissolving in 1,2,4-trichlorobenzene containing 0.0125% of BHT at 160 °C for 10 hours using a GPC analyzer (PL-GP220), and the sample with a concentration of 10 mg/10 mL was supplied in an amount of 200 μL. Mw and Mn were obtained using a calibration curve formed using a polystyrene standard. 9 kinds of the polystyrene standard were used with the molecular weight of 2000 g/mol, 10000 g/mol, 30000 g/mol, 70000 g/mol, 200000 g/mol, 700000 g/mol, 2000000 g/mol, 4000000 g/mol, and 10000000 g/mol.

[Table 1]

| | Comonomer | $MI_{2.16}$ (g/10min) | Density (g/cm$^3$) | Mn (g/mol) | Mw (g/mol) | Mw/Mn |
|---|---|---|---|---|---|---|
| Prep. Ex. 1 (PE-a) | 1-octene | 6.0 | 0.900 | 30000 | 68000 | 2.3 |
| Prep. Ex. 2 (PE-b) | 1-hexene | 0.6 | 0.941 | 28000 | 114000 | 4.1 |

**Comparative Preparation Example 1**

An ethylene/1-butene copolymer manufactured with a Ziegler-Natta catalyst, i.e., a commercially available product ME1000™ (manufactured by LG Chem) was used as Comparative Example 1 (PE-c).

**Comparative Preparation Example 2**

A homo polyethylene manufactured with a metallocene catalyst, i.e., a commercially available SP380™ (manufactured by LG Chem) was used as Comparative Example 2 (PE-d).

**<Preparation of polyethylene composition>**

**Examples 1 to 3 and Comparative Examples 1 to 3**

Polyethylene compositions of Examples 1 to 3 and Comparative Examples 1 to 3 were prepared using the above-described ethylene-alpha olefin copolymers or ethylene homopolymer (homo PE) of Preparation Examples 1 to 2 and Comparative Preparation Examples 1 to 2, respectively, with the compositions shown in Table 2 below.

Specifically, a polyethylene composition was prepared by extruding and granulating with a hopper of 18 rpm and a screw of 350 rpm at 220 °C using a twin extruder (extruder: TEK30MHS from SMPLATEK, L/D ratio: 40, die diameter: 4 mm).

**<Test Example 2: Evaluation of physical properties of polyethylene composition>**

Physical properties of the polyethylene compositions prepared in Examples 1 to 3 and Comparative Examples 1 to 3 were measured by the method described below and are shown in Table 2.

First, the melt index ($MI_{2.16}$), density, weight average molecular weight (Mw, g/mol), number average molecular weight (Mn, g/mol) and molecular weight distribution (Mw/Mn, PDI) of the polyethylene compositions were measured in the same manner as in Test Example 1 above.

**(4) Melting temperature, crystallization temperature, and crystallinity**

The melting temperature (Tm), crystallization temperature (Tc) and crystallinity (Xc) of the polyethylene compositions according to Examples 1 to 3 and Comparative Examples 1 to 3 were measured using a differential scanning calorimeter (DSC, device name: DSC Q20, manufacturer: TA instrument).

Specifically, the polyethylene composition was heated to 180 °C at 10 °C/min (Cycle 1), isothermal at 180 °C for 5 minutes, cooled to 0 °C at 10 °C/min, isothermal at 30 °C for 5 minutes, and then heated again to 180 °C at 10 °C/min (Cycle 2). In the DSC curve obtained above, the temperature at the maximum point of the endothermic peak was measured as the melting temperature (Tm, °C), and the temperature at the maximum point of the exothermic peak was measured as the crystallization temperature (Tc, °C). At this time, the melting temperature (Tm) and the crystallization temperature (Tc)

were shown as the results measured in Cycle 2 in which the second temperature rises and falls.

In addition, the heat of fusion $\Delta Hm$ was obtained by calculating the area of the melting peak in Cycle 2 in which the second temperature rises, and the crystallinity (Xc, %) was calculated by dividing $\Delta Hm$ by $H^0m$ = 293.6 J/g, which is the theoretical value when the crystallinity is 100%.

**(5) Cross fractionation chromatography (CFC)**

A cross fractionation chromatography (CFC) was performed on the polyethylene compositions of Examples 1 to 3 and Comparative Examples 1 to 3 in the following manner. The main chain weight average molecular weight of the high crystalline fraction eluting at 90 °C or more ($Mw_{main,\ T\geq 90\ °C}$), the content ratio of the high crystalline fraction eluting at 90 °C or more (TREF, $_{T\geq 90\ °C}$), and the content ratio (TREF, $_{T<90\ °C}$) of the medium-to-low crystalline fraction eluting less than 90 °C were measured.

**Cross fractionation chromatography (CFC) measurement conditions (including TREF and GPC-IR analysis)**

- Analysis equipment: Polymer Char CFC (Detector: Integrated Detector IR5 MCT)
- Sample preparation and injection: 32 mg of the polyethylene composition was added to a 10 mL vial, and placed in an autosampler. Then, 8 mL of 1,2,4-trichlorobenzene (TCB) was added, dissolved at 160 °C for 90 minutes, and extracted after nitrogen purge, followed by loading on a temperature rising elution fractionation column (TREF column).
- Crystallization: After adjusting the temperature of the sample previously loaded on the TREF column to 100 °C, cooling was performed from 100 °C to 35 °C at 0.5 °C/min.
- Temperature rising elution temperature (TREF) analysis: The previously crystallized sample was heated at 1 °C intervals from 35 °C to 120 °C, and fixed. Then, the fractions eluted at each temperature for 25 minutes were analyzed. Specifically, it was extracted at 35 °C for 25 minutes and analyzed, then extracted and analyzed after raising the temperature at 1 °C intervals, and finally extracted at 120 °C for 25 minutes and analyzed.
- GPC-IR analysis: The fractions eluted at each temperature in the previous TREF analysis were transferred to a GPC column of the GPC (PL-GPC220) device, the molecular weight of the eluted molecules was measured, and the number of short-chain branches (scb) of the eluted molecules at each temperature was measured using a PerkinElmer Spectrum 100 FT-IR connected to the GPC (PL-GPC220).
- Main chain weight average molecular weight of the high crystalline fraction ($Mw_{main,\ T\geq 90\ °C}$): From the results confirmed through CFC analysis of the polyethylene composition, the value of the weight-average molecular weight of the main chain (excluding short-chain branch) of the fractions eluted at 90 °C or more ($Mw_{main,T\geq 90°C}$, g/mol) of the polyethylene composition was calculated by the following Equation 1.

[Equation 1]

$$Mw_{main,T\geq 90℃}\ (g/mol) = \frac{\sum_{T=90\ ℃}\sum_i (M_{T,i} - M_{scb} * n_{T,i}^{scb}) * C_{T,i}}{\sum_{T=90\ ℃}\sum_i C_{T,i}}$$

In Equation 1,

$M_{T,i}$ and $C_{T,i}$ are the weight-average molecular weight (g/mol) and concentration average molecular weight (g/mol) and concentration of each fraction eluted at each measured temperature, respectively, obtained through the above CFC analysis of the polyethylene composition,

$n^{scb}{}_{T,i}$ is the number of branch chains (scb) of each fraction eluted at each measured temperature, respectively, obtained through the above CFC analysis of the polyethylene composition, and

$M_{scb}$ is the weight-average molecular weight (g/mol) of branch chains (scb) of each fraction eluted at each measured temperature, respectively, obtained through the above CFC analysis of the polyethylene composition.

- Content ratio of high crystalline fraction: Based on the total weight of all eluted fractions of the polyethylene composition obtained through the above CFC analysis, the content ratio of high crystalline fractions eluting at 90 °C or more ($TREF_{\geq 90°C}$) was calculated as a percentage (%).
- Content ratio of medium-to-low crystalline fraction: Based on the total weight of all eluted fractions of the polyethylene composition obtained through the above CFC analysis, the content ratio of medium-to-low

crystalline fractions eluting at less than 90 °C ($TREF_{<90°C}$) was calculated as a percentage (%).

**(6) Relaxation Time**

The relaxation time of the polyethylene compositions according to Examples 1 to 3 and Comparative Examples 1 to 3 was measured.

Specifically, the relaxation time (s) of the polyethylene composition was obtained by measuring a viscosity at each temperature of 150 °C, 170 °C, 190 °C, 210 °C, and 230 °C and and at an angular frequency of 0.05 rad/s to 500 rad/s under condition of Strain 0.5%, and Frequency of 0.05 rad/s to 500 rad/s using ARES-G2, a rotational rheometer, manufactured by TA Instruments (New Castle, Delaway, USA), and then calculating the relaxation time (s) with the viscosity using a cross model of the following Equation 2.

[Equation 2]

$$\eta = \eta_\infty + (\eta_0 - \eta_\infty) / (1 + \lambda \times (\text{Shear rate})^m)$$

in Equation 2,

- $\eta$ is a viscosity of the polyethylene composition measured at each temperature of 150 °C, 170 °C, 190 °C, 210 °C, and 230 °C and at an angular frequency of 0.05 rad/s to 500 rad/s using a rotational rheometer,
- $\eta_\infty$ is infinite shear viscosity,
- $\eta_0$ is zero shear viscosity,
- the shear rate is a shear rate applied to the polyethylene composition and is equal to the angular frequency,
- $\lambda$ and m are parameters of fitting a log-log graph in which x-axis is an angular frequency and y-axis is the viscosity $\eta$ to a cross model of Equation 2,
- $\lambda$ is a relaxation time (s) of the polyethylene, and an inverse of the angular frequency at which the viscosity $\eta$ begins to decrease, and
- m is a slope of the viscosity $\eta$ in a region where the viscosity $\eta$ decreases.

Further, the relaxation time (seconds) at 120 °C was calculated at 120 °C through an Arrhenius plot based on the values of the relaxation time (seconds) at each measured temperature, as previously mentioned.

For example, after obtaining the Arrhenius constant (A) through an Arrhenius plot based on the values of the relaxation time (seconds) at each measured temperature, the relaxation time of the polyethylene composition was calculated according to the following Equation 3.

[Equation 3]

$$\ln K = \text{Ln}A + E_a/RT$$

in Equation 3,

- K is the relaxation time (seconds) of the polyethylene composition,
- $E_a$ is the activation energy (J/mol),
- R is the gas constant (8.314 J/mol·K),
- A is the Arrhenius constant, and
- T is the absolute temperature (Kelvin).

[Table 2]

| | Example 1 | Example 2 | Example 3 | Comparative Example 1 | Comparative Example 2 | Comparative Example 3 |
|---|---|---|---|---|---|---|
| Composition | PE-a 30wt%+ PE-b 70wt% | PE-a 20wt%+ PE-b 80wt% | PE-a 15wt%+ PE-b 85wt% | PE-a 30wt%+ PE-c 70wt% | PE-c 100wt% | PE-a 30wt%+ PE-d 70wt% (homo PE) |
| $MI_{2.16}$ (g/10min) | 1.1 | 0.9 | 0.8 | 1.6 | 1.0 | 1.0 |
| Density (g/cm$^3$) | 0.931 | 0.935 | 0.937 | 0.94 | 0.952 | 0.939 |
| Mn (g/mol) | 31000 | 30000 | 31000 | 8900 | 7400 | 37000 |
| Mw (g/mol) | 106000 | 111000 | 116000 | 115000 | 133000 | 109000 |
| Mw/Mn | 3.4 | 3.7 | 3.7 | 12.9 | 18 | 3 |
| Tm (°C) | 127.9 | 128.4 | 128.6 | 130.3 | 131.4 | 132.9 |
| Tc (°C) | 113.7 | 113.4 | 114.1 | 116.1 | 116.8 | 116.3 |
| Xc (%) | 40.8 | 43.9 | 43.7 | 51.8 | 63.3 | 45.8 |
| Main chain weight average molecular weight of high crystalline fraction, $Mw_{main,\ T\geq 90°C}$ (g/mol) | 117100 | 116300 | 113700 | 197200 | 195600 | 152100 |
| Content ratio of high crystalline fraction, $TREF_{\geq 90°C}$ (%) | 50.9 | 59.6 | 64.1 | 50.7 | 73.1 | 68.9 |
| Content ratio of medium-to-low crystalline fraction, $TREF_{<90°C}$ (%) | 49.1 | 40.4 | 35.9 | 49.3 | 26.9 | 31.1 |
| 120°C Relaxation time, $RT_{120°C}$ (s) | 2.2 | 2.1 | 2 | 10.1 | 5.1 | 4.3 |

**<Test Example 3: Preparation of biaxially stretched film and evaluation of physical properties>**

After preparing a biaxially stretched film by the following method using the polyethylene compositions prepared in Examples 1 to 3 and Comparative Examples 1 to 3, physical properties thereof were measured and shown in Table 3.

**Preparation of biaxially stretched film**

- a polyethylene composition sheet having a thickness of 0.75 mm was prepared using a lab extruder line manufactured from Bruckner (L/D ratio: 42, Screw diameter: 25 mm, Melt/T-Die temperature: 220 °C)
- the polyethylene composition sheet with dimensions of 90 mm X 90 mm in length and width was biaxially stretched using KARO 5.0 equipment
- Perform sequential stretching (MD→TD) after preheating for 80 seconds under the following conditions (Example 1: preheating and stretching at 120 °C, Examples 2: preheating and stretching at 125 °C, Examples 3: preheating and stretching at 122 °C, Comparative Example 1: preheating and stretching at 115 °C, Comparative Example 2: preheating and stretching at 125 °C, Comparative Example 3: Stretching was attempted under the same conditions as Comparative Example 2, but it was determined that stretching was not possible).

**Evaluation of physical properties of biaxially stretched film**

- Tensile strength (MPa), tensile modulus (MPa) and tensile elongation (%): Measured in MD/TD directions according to

ASTM D 882 standard.

- Tear strength (N/mm): Measured in MD/TD directions according to ASTM 1922 standard.
- Haze (%): Measured according to ASTM 1003 standard.
- Gloss 45°: Measured according to ASTM 2457 standard.
- Shrinkage (%): Length change was measured after shrinkage at 100 °C or 120 °C for 7 minutes according to ASTM D 1204 standard. Specifically, the shrinkage (%) was measured as [(1 - length after shrinkage)/length before shrinkage] X 100.
- Puncture strength (N/mm): Measured according to EN 14477 standard.

[Table 3]

| | | Example 1 | Example 2 | Example 3 | Compara tive Example 1 | Compara tive Example 2 | Compara tive Example 3 |
|---|---|---|---|---|---|---|---|
| Maximum stretching ratio (MD×TD) | | 5×8 | 5×8 | 4×6 | 4×6 | 4×6 | Stretchin g was not possible |
| Haze(%) | | 1.6 | 1.7 | 1.9 | 2.0 | 9.5 | - |
| Gloss(45°) | | 94 | 94 | 93 | 90 | 61 | - |
| Tensile strength (Mpa) | MD | 130 | 134 | 123 | 90 | 62 | - |
| | TD | 203 | 200 | 203 | 134 | 102 | - |
| | Average of MD, TD | 166.5 | 167 | 163 | 112 | 82 | - |
| Tensile modulus (Mpa) | MD | 645 | 770 | 653 | 308 | 657 | - |
| | TD | 944 | 1007 | 940 | 383 | 689 | - |
| | Average of MD, TD | 794.5 | 888.5 | 796.5 | 345.5 | 673 | - |
| Tensile elongation (%) | MD | 220 | 223 | 164 | 267 | 329 | - |
| | TD | 87 | 86 | 65 | 131 | 155 | - |
| | Average of MD, TD | 153.5 | 154.5 | 114.5 | 199 | 242 | - |
| Tear strength (N/mm) | MD | 13.1 | 11.1 | 6.5 | 51.5 | 15.4 | - |
| | TD | 6.4 | 3.7 | 1.6 | 26.8 | 7.0 | - |
| | Average of MD, TD | 9.75 | 7.4 | 4.05 | 39.15 | 7.7 | - |
| Shrinkage (@100, %) | MD | 0.8 | 0.8 | 0.8 | 2.5 | 0.8 | - |
| | TD | 5.0 | 4.2 | 2.9 | 10.0 | 2.1 | - |
| | MD+TD | 5.8 | 5.0 | 3.7 | 12.5 | 2.9 | - |
| Shrinkage (@120, %) | MD | 5.0 | 4.6 | 7.9 | 9.9 | 1.7 | - |
| | TD | 15.8 | 14.2 | 21.3 | 33.3 | 7.1 | - |
| | MD+TD | 20.8 | 18.8 | 29.2 | 43.2 | 8.8 | - |
| Puncture strength (N/mm) | | 357.0 | 388.3 | 362.0 | 269.8 | 211.4 | - |

According to the results of Table 2 and Table 3, it was confirmed that the compositions of Examples meeting the predetermined main chain weight average molecular weight had excellent stretchability and stretching stability with outstanding stretching stability and high shrink resistance when manufactured as a biaxially stretched film, and exhibited excellent mechanical properties compared to Comparative Examples.

## Claims

1. A polyethylene composition comprising at least one ethylene-alpha olefin copolymer, wherein a main chain of a high crystalline fraction eluting at 90 °C or more ($Mw_{main, T\geq 90\ °C}$) derived from cross fractionation chromatography (CFC) analysis of the polyethylene composition has a weight average molecular weight of 150000 g/mol or less.

2. The polyethylene composition according to Claim 1, wherein the polyethylene composition comprises

   (a) a first ethylene-alpha olefin copolymer having a density of 0.870 g/cm$^3$ to 0.920 g/cm$^3$ and a melt index ($MI_{2.16}$, 190 °C, 2.16 kg load) of 3.0 g/10min to 10.0 g/10min; and
   (b) a second ethylene-alpha olefin copolymer having a density of 0.930 g/cm$^3$ to 0.960 g/cm$^3$ and a melt index ($MI_{2.16}$, 190 °C, 2.16 kg load) of 0.2 g/10min to 2.0 g/10min.

3. The polyethylene composition according to Claim 1, wherein the main chain of the high crystalline fraction eluting at 90 °C or more ($Mw_{main, T\geq 90\ °C}$) derived from the cross fractionation chromatography (CFC) analysis of the polyethylene composition has a weight average molecular weight of 50000 g/mol to 150000 g/mol.

4. The polyethylene composition according to Claim 1, wherein a content ratio of the high crystalline fraction eluting at 90 °C or more ($TREF_{\geq 90°C}$) derived from the cross fractionation chromatography (CFC) analysis of the polyethylene composition is 50% or more of a total weight of all eluted fractions.

5. The polyethylene composition according to Claim 1, wherein a content ratio of a medium-to-low crystalline fraction eluting at less than 90 °C ($TREF_{T<90°C}$) derived from the cross fractionation chromatography (CFC) analysis of the polyethylene composition is 50% or less of a total weight of all eluted fractions.

6. The polyethylene composition according to Claim 1, wherein the polyethylene composition has a relaxation time ($RT_{120°C}$) at 120 °C of 4.0 seconds or less.

7. The polyethylene composition according to Claim 1, wherein the polyethylene composition has a density of 0.928 g/cm$^3$ to 0.942 g/cm$^3$ and a melt index ($MI_{2.16}$, 190 °C, 2.16 kg load) of 0.6 g/10min to 1.5 g/10min.

8. The polyethylene composition according to Claim 1, wherein the polyethylene composition has a number average molecular weight (Mn) of 25000 g/mol or more, a weight average molecular weight (Mw) of 105000 g/mol or more, and a molecular weight distribution (Mw/Mn) of 5.0 or less.

9. The polyethylene composition according to Claim 1, wherein the polyethylene composition has a melting point (Tm) of 125 °C to 129 °C, a crystallization temperature (Tc) of 112 °C to 115 °C, and a crystallinity (Xc) of 35% to 48%.

10. The polyethylene composition according to Claim 2, wherein the polyethylene composition comprises the first ethylene-alpha olefin copolymer (a) in an amount of more than 0 and 40 wt% or less, and the second ethylene-alpha olefin copolymer (b) in an amount of 60 wt% or more and less than 100 wt%.

11. The polyethylene composition according to Claim 2,

    wherein the first ethylene-alpha olefin copolymer (a) has
    a number average molecular weight (Mn) of 20000 g/mol or more,
    a weight average molecular weight (Mw) of 60000 g/mol or more and 95000 g/mol or less, and
    a molecular weight distribution (Mw/Mn) of 2.0 or more and less than 3.5.

12. The polyethylene composition according to Claim 2,

wherein the first ethylene-alpha olefin copolymer (a) comprises at least one alpha-olefin selected from the group consisting of 1-butene, 1-pentene, 1-hexene, 4-methyl-1-pentene, 1-octene, 1-decene, 1-dodecene, 1-tetradecene, 1-hexadecene, 1-octadecene, and 1-eicosene.

**13.** The polyethylene composition according to Claim 2,
wherein the first ethylene-alpha olefin copolymer (a) comprises an ethylene/1-octene copolymer.

**14.** The polyethylene composition according to Claim 2,

wherein the second ethylene-alpha olefin copolymer (b) has
a number average molecular weight (Mn) of 20000 g/mol or more,
a weight average molecular weight (Mw) of 95000 g/mol or more and 150000 g/mol or less, and
a molecular weight distribution (Mw/Mn) of 3.5 or more and 4.8 or less.

**15.** The polyethylene composition according to Claim 2,
wherein the second ethylene-alpha olefin copolymer (b) comprises at least one alpha-olefin selected from the group consisting of 1-butene, 1-pentene, 1-hexene, 4-methyl-1-pentene, 1-octene, 1-decene, 1-dodecene, 1-tetradecene, 1-hexadecene, 1-octadecene, and 1-eicosene.

**16.** The polyethylene composition according to Claim 2,
wherein the second ethylene-alpha olefin copolymer (b) comprises an ethylene/1-hexene copolymer.

**17.** A biaxially stretched film comprising the polyethylene composition according to Claim 1.

**18.** The biaxially stretched film according to Claim 17,
wherein the biaxially stretched film is a film stretched at a machine direction (MD) stretching ratio of 4 times or more, and a transverse direction (TD) stretching ratio of 6 times or more.

**19.** The biaxially stretched film according to Claim 17,

wherein a sum of a machine direction (MD) shrinkage and a transverse direction (TD) shrinkage of the biaxially stretched film measured after contraction at 100 °C for 7 minutes according to ASTM D 1204 is 6.0% or less, or the sum of the MD shrinkage and the TD shrinkage of the biaxially stretched film measured after contraction at 120 °C for 7 minutes according to ASTM D 1204 is 22.0% or less,
while satisfying a condition that the biaxially stretched film is stretched at an MD stretching ratio of 4 times or more, and a TD stretching ratio of 6 times or more.

## INTERNATIONAL SEARCH REPORT

International application No.
**PCT/KR2023/014459**

**A. CLASSIFICATION OF SUBJECT MATTER**

**C08L 23/08**(2006.01)i; **C08F 210/16**(2006.01)i; **C08F 210/14**(2006.01)i; **C08J 5/18**(2006.01)i; **B29C 55/12**(2006.01)i

According to International Patent Classification (IPC) or to both national classification and IPC

**B. FIELDS SEARCHED**

Minimum documentation searched (classification system followed by classification symbols)

C08L 23/08(2006.01); B29C 48/00(2019.01); C08F 10/02(2006.01); C08F 210/16(2006.01); C08F 4/6192(2006.01); C08K 5/14(2006.01); C08L 23/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 에틸렌(ethylene), 옥텐(octene), 헥센(hexene), 크로마토그래피(chromatography), 중량평균분자량(weight average molecular weight)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2017-0004393 A (LG CHEM, LTD.) 11 January 2017 (2017-01-11) See claims 1-8; and paragraphs [0003]-[0110]. | 1-19 |
| Y | JP 2018-044122 A (ASAHI KASEI CORP.) 22 March 2018 (2018-03-22) See claim 1; and paragraphs [0010]-[0016]. | 1-19 |
| A | JP 2015-010104 A (MITSUI CHEMICALS INC. et al.) 19 January 2015 (2015-01-19) See entire document. | 1-19 |
| A | KR 10-2021-0080973 A (LG CHEM, LTD.) 01 July 2021 (2021-07-01) See entire document. | 1-19 |
| A | JP 6778480 B2 (ASAHI KASEI CORP.) 04 November 2020 (2020-11-04) See entire document. | 1-19 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 December 2023** | **29 December 2023** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/014459**

| Patent document cited in search report | Publication date (day/month/year) | Patent family member(s) | Publication date (day/month/year) |
|---|---|---|---|
| KR 10-2017-0004393 A | 11 January 2017 | KR 10-1989970 B1 | 17 June 2019 |
| JP 2018-044122 A | 22 March 2018 | None | |
| JP 2015-010104 A | 19 January 2015 | None | |
| KR 10-2021-0080973 A | 01 July 2021 | None | |
| JP 6778480 B2 | 04 November 2020 | JP 2017-088755 A | 25 May 2017 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220120055
- KR 1020230126269


### Non-patent literature cited in the description


- *Tetrahedron Lett.*, 1988, 2951